(19) Europäisches Patentamt
European Patent Office
Office européen des brevets

(11) **EP 2 962 408 B1**

(12) **EUROPEAN PATENT SPECIFICATION**

(45) Date of publication and mention
of the grant of the patent:
**20.11.2019 Bulletin 2019/47**

(21) Application number: **14756406.6**

(22) Date of filing: **26.02.2014**

(51) Int Cl.:
**H04W 72/12** (2009.01)   **H04L 1/18** (2006.01)

(86) International application number:
**PCT/KR2014/001585**

(87) International publication number:
**WO 2014/133320 (04.09.2014 Gazette 2014/36)**

(54) **SCHEDULING OVER MULTIPLE TRANSMISSION TIME INTERVALS**

PLANUNG ÜBER MEHRERE ÜBERTRAGUNGSZEITINTERVALLE

PROGRAMMATION SUR UNE PLURALITÉ D'INTERVALLES DE TEMPS DE TRANSMISSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2013 US 201361769488 P
27.02.2013 US 201361770120 P
20.02.2014 US 201414185662**

(43) Date of publication of application:
**06.01.2016 Bulletin 2016/01**

(73) Proprietor: **Samsung Electronics Co., Ltd.
Suwon-si, Gyeonggi-do 443-742 (KR)**

(72) Inventors:
• **PAPASAKELLARIOU, Aris**
 **Houston, Texas 77098 (US)**
• **NAM, Young-Han**
 **Plano, Texas 75025 (US)**

(74) Representative: **Gulde & Partner
Patent- und Rechtsanwaltskanzlei mbB
Wallstraße 58/59
10179 Berlin (DE)**

(56) References cited:
**US-A1- 2009 046 605   US-A1- 2009 175 232**

• CATT: "DAI Design for LTE-A", 3GPP DRAFT; R1-104311, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Madrid, Spain; 20100823, 17 August 2010 (2010-08-17), XP050449669, [retrieved on 2010-08-17]
• ERICSSON: "Details of ACK/NAK bundling for TDD", 3GPP DRAFT; R1-081566, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shenzhen, China; 20080330, 30 March 2008 (2008-03-30), XP050109981, [retrieved on 2008-03-30]
• ERICSSON: "TTI bundling", 3GPP DRAFT; R1-084549 CR0143R1 TO 36213 ON TTI BUNDLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081118, 18 November 2008 (2008-11-18), XP050317796, [retrieved on 2008-11-18]
• 3gpp Lte: "Physical layer procedures", 3GPP TS 36.213 V11.1.0, 1 December 2012 (2012-12-01), XP055274196, Retrieved from the Internet: URL:http://www.3gpp.org/ftp/Specs/archive/36_series/36.213/36213-b10.zip [retrieved on 2016-05-23]

- ERICSSON: "Remaining issues for TDD ACK/NAK bundling and PUSCH", 3GPP DRAFT; R1-082462, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Warsaw, Poland; 20080625, 25 June 2008 (2008-06-25), XP050110733, [retrieved on 2008-06-25]
- ERICSSON: "Details of ACK/NAK bundling for TDD", 3GPP DRAFT; R1-082002, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Kansas City, USA; 20080514, 14 May 2008 (2008-05-14), XP050110349, [retrieved on 2008-05-14]
- CATT: "Multi-TTI Scheduling for LTE TDD UL", 3GPP DRAFT; R1-080797_MULTI-TTI SCHEDULING FOR LTE TDD UL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sorrento, Italy; 20080205, 5 February 2008 (2008-02-05), XP050109280, [retrieved on 2008-02-05]
- MOTOROLA: "Remaining Details on ACK/NACK Bundling for TDD", 3GPP DRAFT; R1-082473, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Warsaw, Poland; 20080624, 24 June 2008 (2008-06-24), XP050110743, [retrieved on 2008-06-24]
- '3GPP; TSGRAN; E-UTRA; Physical layer procedures (Release 11. /36213-b10' 3GPP TS 36.213 V11.1.0 December 2012, XP055274196 Retrieved from the Internet: <URL:http://www.3gpp.org/ftp/Specs/archive/36_series/36.213/36213-b10.zip>
- PANTECH: 'Remaining PDSCH HARQ timing on SCell for inter-band CA TDD' R1-122444, 3GPP TSG RANI #69 21 May 2012, PRAGUE, CZECH REPUBLIC, XP050600697 Retrieved from the Internet: <URL:http://www.3gpp.org/ftp/tsg_ran/WG1_RL 1/TSGR1_69/Docs/R1-122444.zip>
- NTT DOCOMO: 'PDCCH Enhancement for Different TDD UL-DL Configuration on Different Bands' R1-121464, 3GPP TSG RAN WG1 MEETING #68BIS 26 March 2012, JEJU, KOREA, XP050599745 Retrieved from the Internet: <URL:http://www.3gpp.org/ftp/tsg_ran/WG1_RL 1/TSGR1_68b/Docs/R1-121464.zip>

**Description**

**BACKGROUND OF THE INVENTION**

1. Field of the Invention:

The present application relates generally to wireless communication systems and, more specifically, to scheduling of data transmissions.

2. Description of the Related Art:

A communication system includes a DownLink (DL) that conveys signals from transmission points such as Base Stations (BSs) or NodeBs to User Equipments (UEs) and an UpLink (UL) that conveys signals from UEs to reception points such as NodeBs. A UE, also commonly referred to as a terminal or a mobile station, may be fixed or mobile and may be a cellular phone, a personal computer device, and the like. A NodeB, which is generally a fixed station, may also be referred to as an access point or other equivalent terminology.DL signals include data signals, which carry information content, control signals, which carry DL Control Information (DCI), and Reference Signals (RS) which are also known as pilot signals. A NodeB conveys data information to UEs through respective Physical Downlink Shared CHannels (PDSCHs) and DCI through respective Physical Downlink Control CHannels (PDCCHs). UL signals also include data signals, which carry information content, control signals, which carry UL Control Information (UCI), and RS. UEs convey data information to NodeBs through respective Physical Uplink Shared CHannels (PUSCHs) and UCI through respective Physical Uplink Control CHannels (PUCCHs). A UE transmitting data information may also convey UCI through a PUSCH. UCI includes Hybrid Automatic Repeat reQuest ACKnowledgement (HARQ-ACK) information, indicating correct or incorrect detection of data Transport Blocks (TBs) or an acknowledgement for an SPS release, and Channel State Information (CSI).

In a number of documents, such as CATT: "DAI Design for L TE-A", 3GPP DRAFT; R1-1 04311, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX ; FRANCE, vol. RAN WG1, no. Madrid, Spain; 20100823, 17 August 2010, a design of DCI/UCI formats is generally discussed.

Similar subject matter is generally described in the following documents:

ERICSSON: "Details of ACK/NAK bundling for TDD", 3GPP DRAFT; R1-081566, 3RD GENERATION PARTNERSHIP PROJECT (3GPP), MOBILE COMPETENCE CENTRE; 650, ROUTE DES LUCIOLES ; F-06921 SOPHIA-ANTIPOL1S CEDEX ; FRANCE, vol. RAN WG1, no. Shenzhen, China; 20080330, 30 March 2008;

ERICSSON: "TTI bundling", 3GPP DRAFT; R1-084549 CR0143R1 TO 36213 ON TTI BUNDLING, 3RD GENERATION PARTNERSHIP PROJECT (3GPP), MOBILE COMPETENCE CENTRE; 650, ROUTE DES LUCIOLES ; F-06921 SOPHIA-ANTIPOL1S CEDEX ; FRANCE, no. Prague, Czech Republic; 20081118, 18 November 2008;

3gpp Lte: "Physical layer procedures", 3GPP TS 36.213 V11.1.0, 1 December 2012 (2012-12-01); ERICSSON: "Remaining issues for TDD ACK/NAK bundling and PUSCH", 3GPP DRAFT; R1-082462, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX ; FRANCE, vol. RAN WG1, no. Warsaw, Poland; 20080625, 25 June 2008;

ERICSSON: "Details of ACK/NAK bundling for TDD", 3GPP DRAFT; R1-082002, 3RD GENERATION PARTNERSHIP PROJECT (3GPP), MOBILE COMPETENCE CENTRE; 650, ROUTE DES LUCIOLES ; F-06921 SOPHIA-ANTIPOL1S CEDEX ; FRANCE, vol. RAN WG1, no. Kansas City, USA; 20080514, 14 May 2008;

CATT: "Multi-TTI Scheduling for LTE TDD UL", 3GPP DRAFT; R1-080797 MUL TI-TTI SCHEDULING FOR LTE TDD UL, 3RD GENERATION PARTNERSHIP PROJECT (3GPP), MOBILE COMPETENCE CENTRE; 650, ROUTE DES LUCIOLES ; F-06921 SOPHIA-ANTIPOL1S CEDEX ; FRANCE, vol. RAN WG1, no. Sorrento, Italy; 20080205, 5 February 2008;

MOTOROLA: "Remaining Details on ACK1NACK Bundling for TDD", 3GPP DRAFT; R1-082473, 3RD GENERATION PARTNERSHIP PROJECT (3GPP), MOBILE COMPETENCE CENTRE; 650, ROUTE DES LUCIOLES ; F-06921 SOPHIA-ANTIPOL1S CEDEX ; FRANCE, vol. RAN WG1, no. Warsaw, Poland; 20080624, 24 June 2008.

**SUMMARY OF THE INVENTION**

This disclosure provides method and apparatus for scheduling over multiple transmission time intervals. The invention is defined in the appended independent claims. Embodiments of the invention representing particular realisations thereof are defined in the dependent claims.

In the following, use of the word "embodiment" or "exemplary embodiment" has to be understood as "example".

In a first exemplary embodiment, a method is provided. The method includes transmitting, by a base station to a User Equipment (UE), one or more Physical Downlink Shared CHannels (PDSCHs) in respective one or more Transmission Time Intervals (TTIs), wherein the one or more PDSCHs scheduled by a Downlink Control Information (DCI) format that includes at least one field of binary elements is transmitted by the base station in a Physical Downlink Control CHannel (PDCCH) in a first TTI. The method also includes indicating, by a value of the at least one field of binary elements, a number for the DCI format, wherein the number is a counter of DCI formats the base station transmits to the UE in a set of TTIs, when the DCI format can schedule only one PDSCH transmission to the UE in the first TTI. The method further includes indicating, by a value of the at least one field of binary elements, a number for the one or more TTIs in which the base station transmits one or more respective PDSCHs to the UE when the DCI format can schedule multiple PDSCH transmissions to the UE in respective multiple TTIs.

In a second exemplary embodiment, a method is provided. The method includes transmitting, by a base station to a User Equipment (UE), one or more Physical Downlink Shared CHannels (PDSCHs) in respective one or more Transmission Time Intervals (TTIs), wherein the one or more PDSCHs scheduled by a Downlink Control Information (DCI) format that is transmitted by the base station in a Physical Downlink Control CHannel (PDCCH) in a first TTI, and wherein each PDSCH includes one or more data transport blocks. Transmitting the one or more PDSCHS includes transmitting a data transport block using an asynchronous hybrid automatic repeat request process when the DCI format can schedule only one PDSCH transmission to the UE in one TTI; and transmitting a data transport block using a synchronous hybrid automatic repeat request process when the DCI format can schedule multiple PDSCH transmissions to the UE in respective multiple TTIs.

In a third exemplary embodiment, a method is provided. The method includes transmitting, by a User Equipment (UE) to a base station, one or more Physical Uplink Shared CHannels (PUSCHs) in respective one or more Transmission Time Intervals (TTIs), wherein the one or more PUSCHs scheduled by a Downlink Control Information (DCI) format is transmitted by the base station in a Physical Downlink Control CHannel (PDCCH), and wherein each PUSCH includes a data transport block that is associated with a Hybrid Automatic Repeat reQuest (HARQ) process. Transmitting the one or more PUSCHS includes transmitting a data transport block associated with a first HARQ process from a first number of HARQ processes when the DCI format can schedule only one PUSCH transmission in one TTI; and transmitting a data transport block associated with a second HARQ process from a second number of HARQ processes when the DCI format can schedule multiple PUSCH transmissions in respective multiple TTIs, wherein the second number is larger than the first number.

In a fourth exemplary embodiment, a method is provided. The method includes transmitting, by a User Equipment (UE), an acknowledgement signal in a Physical Uplink Control CHannel (PUCCH), the acknowledgement signal transmitted in response to one of: a reception of a first Physical Downlink Shared CHannel (PDSCH) in a first Transmission Time Interval (TTI), and a reception of a second PDSCH in a second TTI after the first TTI, the first PDSCH or the second PDSCH scheduled by a Downlink Control Information (DCI) format transmitted by a base station in a Physical Downlink Control CHannel (PDCCH) over Control Channel Elements (CCEs) in the first TTI. Transmitting the acknowledgment signal includes informing by the base station to the UE a second PUCCH resource; transmitting a first acknowledgement signal, in response to the first PDSCH reception, in a first PUCCH resource determined from a CCE with a lowest index; and transmitting a second acknowledgement signal, in response to the second PDSCH reception in the second PUCCH resource.

In a fifth exemplary embodiment, a method is provided. The method includes transmitting, by a User Equipment (UE), an acknowledgement signal in a Physical Uplink Control CHannel (PUCCH), the acknowledgement signal transmitted in response to one of: a reception of a first Physical Downlink Shared CHannel (PDSCH) in a first Transmission Time Interval (TTI); and a reception of a second PDSCH in a second TTI after the first TTI, the first PDSCH or the second PDSCH scheduled by a Downlink Control Information (DCI) format transmitted by a base station in a Physical Downlink Control CHannel (PDCCH) over Control Channel Elements (CCEs) in the first TTI. Transmitting the acknowledgement includes receiving information from the base station regarding a set of PUCCH resources; and transmitting the acknowledgement signal, in response to the first PDSCH reception in a first PUCCH resource determined from the CCE with a lowest index or transmitting the acknowledgement signal in response to the second PDSCH reception.

In a sixth exemplary embodiment, a user equipment (UE) is provided. The UE includes a receiver configured to receive one or more Physical Downlink Shared CHannels (PDSCHs) transmitted from a base station in respective one or more Transmission Time Intervals (TTIs), the one or more PDSCHs scheduled by a Downlink Control Information (DCI) format that includes at least one field consisting of binary elements and is transmitted by the base station in a Physical Downlink Control CHannel (PDCCH) in a first TTI, the receiver configured to receive the one PDSCH in the one TTI or receive the one or more PDSCHs in the one or more TTIs. The UE also includes a detector configured to detect the DCI format and obtain a value for the at least one field. The UE further includes a processor configured to determine, from the value, at least one of: a number for the DCI format, wherein the number is a counter of DCI formats received from the base station in a set of TTIs, when the DCI format can schedule only one PDSCH transmission to the UE in the first TTI, and a number of one or more TTIs where one or more respective PDSCHs is received by the receiver when the DCI format can schedule multiple PDSCH transmissions to the UE in respective multiple TTIs.

In a seventh exemplary embodiment, a user equipment (UE) is provided. The UE includes a receiver configured to receive one or more Physical Downlink Shared CHannels (PDSCHs) transmitted by a base station in respective one or more Transmission Time Intervals (TTIs), the one or more PDSCHs scheduled by a Downlink Control Information (DCI) format that is transmitted by the base station in a Physical Downlink Control CHannel (PDCCH) in a first TTI, wherein each PDSCH includes one or more data transport blocks. The receiver is configured to receive a data transport block in accordance to an asynchronous hybrid automatic repeat request process when the DCI format can schedule only one PDSCH reception in one TTI or for receiving a data transport block in accordance to a synchronous hybrid automatic repeat request process when the DCI format can schedule multiple PDSCH receptions in respective multiple TTIs. The UE also includes detector configured to detect the DCI format.

In an eighth exemplary embodiment, a user equipment (UE) is provided. The UE includes a transmitter configured to transmit one or more data transport blocks in respective one or more Physical Uplink Shared CHannels (PUSCHs) over respective one or more Transmission Time Intervals (TTIs) to a base station, the one or more PUSCHs scheduled by a Downlink Control Information (DCI) format received from the base station in a Physical Downlink Control CHannel (PDCCH), wherein each PUSCH includes a data transport block that is associated with a Hybrid Automatic Repeat reQuest (HARQ) process. The UE also includes a processor configured to determine whether the DCI format can schedule only one PUSCH transmission in one TTI or can schedule multiple PUSCH transmissions in respective multiple TTIs. The transmitter is configured to one of: transmit a PUSCH that includes a data transport block associated with a first HARQ process from a first number of HARQ processes when the DCI format can schedule only one PUSCH transmission in one TTI; and transmit a PUSCH that includes a data transport block associated with a second HARQ process from a second number of HARQ processes when the DCI format can schedule multiple PUSCH transmissions in respective multiple TTIs. The second number is larger than the first number.

In a ninth exemplary embodiment, a user equipment (UE) is provided. The UE includes a transmitter configured to transmit an acknowledgement signal in a Physical Uplink Control CHannel (PUCCH), the acknowledgment signal transmitted in response to one of: a reception of a first Physical Downlink Shared CHannel (PDSCH) in a first Transmission Time Interval (TTI), and a reception of a second PDSCH in a second TTI after the first TTI. The first PDSCH or the second PDSCH scheduled by a Downlink Control Information (DCI) format transmitted by a base station in a Physical Downlink Control CHannel (PDCCH) over Control Channel Elements (CCEs) in the first TTI. The UE includes a detector configured to detect the DCI format. The UE also includes a receiver configured to receive at least one of the first PDSCH and the second PDSCH. The UE further includes a memory unit configured to store a second PUCCH resource. The transmitter is configured to one of: transmit a first acknowledgement signal, in response to the first PDSCH reception, in a first PUCCH resource determined from the CCE with a lowest index, and transmit a second acknowledgement signal, in response to the second PDSCH reception, in the second PUCCH resource.

In a tenth exemplary embodiment, a user equipment (UE) is provided. The UE includes a transmitter configured to transmit an acknowledgement signal in a Physical Uplink Control CHannel (PUCCH), the acknowledgment signal transmitted in response to one of: a reception of a first Physical Downlink Shared CHannel (PDSCH) in a first Transmission Time Interval (TTI), and a reception of a second PDSCH in a second TTI after the first TTI. The first PDSCH or the second PDSCH scheduled by a Downlink Control Information (DCI) format that is transmitted by a base station in a Physical Downlink Control CHannel (PDCCH) over Control Channel Elements (CCEs) in the first TTI. The UE also includes a detector configured to detect the DCI format and a receiver configured to receive the first PDSCH or the second PDSCH. The UE further includes a memory unit configured to store a set of PUCCH resources. The transmitter is configured to transmit the acknowledgement signal in response to the first PDSCH reception in a first PUCCH resource determined from a CCE with a lowest index or transmit the acknowledgment signal in a response to the second PDSCH reception in a second PUCCH resource determined from the set of PUCCH resources.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as future uses of such defined words and phrases.

## BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates a wireless network according to embodiments of the present disclosure;
FIGURE 2A illustrates a high-level diagram of a wireless transmit path according to embodiments of the present disclosure;
FIGURE 2B illustrates a high-level diagram of a wireless receive path according to embodiments of the present disclosure;
FIGURE 3 illustrates a user equipment according to embodiments of the present disclosure;
FIGURE 4 illustrates a structure for PDCCH transmissions and for EPDCCH transmissions according to embodiments of the present disclosure;
FIGURE 5 illustrates an encoding process for a DCI format conveyed by a PDCCH or an EPDCCH according to embodiments of the present disclosure;
FIGURE 6 illustrates a decoding process for a DCI format conveyed by a PDCCH or an EPDCCH according to embodiments of the present disclosure;
FIGURE 7 illustrates a PUSCH transmission according to embodiments of the present disclosure;
FIGURE 8 illustrates a PUSCH reception according to embodiments of the present disclosure;
FIGURE 9 illustrates TTI associations according to embodiments of the present disclosure;
FIGURE 10 illustrates a process for using an EPDCCH in DL TTIs and using a PDCCH in special TTIs, at least for configurations of special TTIs that do not support EPDCCH transmissions according to embodiments of the present disclosure;
FIGURE 11 illustrates a process for using a DL DAI field for DL multi-TTI PDSCH scheduling according to embodiments of the present disclosure;
FIGURES 12 and 13 illustrate additional TTI associations according to embodiments of the present disclosure;
FIGURE 14 illustrates a process for using an HRO field for indicating a higher layer resource from a set of higher layer configured resources for HARQ-ACK transmissions associated with DL multi-TTI scheduling in FDD according to embodiments of the present disclosure;
FIGURE 15 illustrates a process for using an HRO field for indicating a higher layer resource from a set of higher layer configured resources for HARQ-ACK transmissions associated with DL multi-TTI scheduling in TDD according to embodiments of the present disclosure;
FIGURE 16 illustrates an activation or non-activation of DL multi-TTI scheduling according to embodiments of the present disclosure;
FIGURE 17 illustrates a structure of a DL TTI configured for MBMS traffic depending on whether UL multi-TTI scheduling is supported according to embodiments of the present disclosure;
FIGURE 18 illustrates a frame structure according to embodiments of the present disclosure;
FIGURE 19 illustrates mapping of UE-specific reference signals, antenna ports in normal-CP subframes according to embodiments of the present disclosure;
FIGURE 20 illustrates mapping of UE-specific reference signals, antenna ports in extended-CP subframes according to embodiments of the present disclosure;
FIGURE 21 illustrates mapping of demodulation reference signals, antenna ports in normal-CP subframes according to embodiments of the present disclosure;
FIGURE 22 illustrates mapping of demodulation reference signals, antenna ports in extended-CP subframes according to embodiments of the present disclosure;
FIGURE 23 illustrates ECCE mapping unit comprising three consecutive PRB pairs according to embodiments of the present disclosure;
FIGURE 24 illustrates EREG mapping methods when four antenna ports are assigned per PRB pair according to embodiments of the present disclosure; and
FIGURE 25 illustrates EREG mapping methods when two antenna ports are assigned per PRB pair according to embodiments of the present disclosure.

## DETAILED DESCRIPTION OF EXEMPLARY EMBODIMENTS

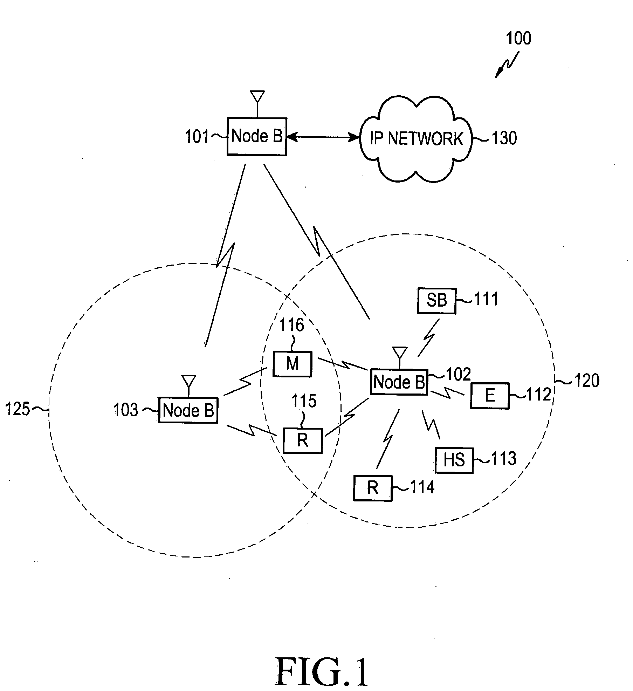

FIGURES 1 through 17, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged cellular system.

FIGURE 1 illustrates a wireless network 100 according to one embodiment of the present disclosure. The embodiment of wireless network 100 illustrated in FIGURE 1 is for illustration only. Other embodiments of wireless network 100 could be used without departing from the scope of this disclosure.

The wireless network 100 includes NodeB 101, NodeB 102, and NodeB 103. NodeB 101 communicates with NodeB 102 and NodeB 103. NodeB 101 also communicates with Internet protocol (IP) network 130, such as the Internet, a proprietary IP network, or other data network.

Depending on the network type, other well-known terms may be used instead of "NodeB", such as "transmission point" (TP), "base station" (BS), "access point" (AP), or "eNodeB" (eNB). For the sake of convenience, the term NodeB shall be used herein to refer to the network infrastructure components that provide wireless access to remote terminals. Also, depending on the network type, other well-known terms may be used instead of "user equipment" or "UE," such as "mobile station," "subscriber station," "remote terminal," "wireless terminal," or "user device." For the sake of convenience, the terms "user equipment" and "UE" are used in this patent document to refer to remote wireless equipment that wirelessly accesses a NodeB, whether the UE is a mobile device (such as a mobile telephone or smartphone) or is normally considered a stationary device (such as a desktop personal computer, vending machine).

NodeB 102 provides wireless broadband access to network 130 to a first plurality of user equipments (UEs) within coverage area 120 of NodeB 102. The first plurality of UEs includes UE 111, which may be located in a small business; UE 112, which may be located in an enterprise; UE 113, which may be located in a WiFi hotspot; UE 114, which may be located in a first residence; UE 115, which may be located in a second residence; and UE 116, which may be a mobile device, such as a cell phone, a wireless laptop, a wireless PDA, or the like. NodeB 103 provides wireless broadband access to a second plurality of UEs within coverage area 125 of NodeB 103. The second plurality of UEs includes UE 115 and UE 116. UEs 111-116 may be any wireless communication device, such as, but not limited to, a mobile phone, mobile PDA and any mobile station (MS). In some embodiments, one or more of NodeBs 101-103 can communicate with each other and with UEs 111-116 using LTE or LTE-A techniques including techniques for using control channel elements of PDCCHs as described in embodiments of the present disclosure.

Dotted lines show the approximate extents of coverage areas 120 and 125, which are shown as approximately circular for the purposes of illustration and explanation only. It should be clearly understood that the coverage areas associated with base stations, for example, coverage areas 120 and 125, may have other shapes, including irregular shapes, depending upon the configuration of the base stations and variations in the radio environment associated with natural and man-made obstructions.

As described in more detail below, one or more of NodeB 102 and NodeB 103 includes processing circuitry, such as transmit circuitry, configured to transmit, to one or more of UE 111 through UE 116, a Downlink Control Information (DCI) format in a Physical Downlink Control CHannel (PDCCH) in a Transmission Time Interval (TTIs), wherein the DCI format is configured to schedule transmissions of one or more Physical Downlink Shared CHannels (PDSCHs) from the NodeB to the UE in respective one or more TTIs or is configured to schedule transmissions of one or more Physical Uplink Shared CHannels (PUSCHs) from the UE to the NodeB in respective one or more TTIs.

Although FIGURE 1 depicts one example of a wireless network 100, various changes may be made to FIGURE 1. For example, another type of data network, such as a wired network, may be substituted for wireless network 100. In a wired network, network terminals may replace NodeBs 101-103 and UEs 111-116. Wired connections may replace the wireless connections depicted in FIGURE 1. In addition, the wireless network 100 could include any number of NodeBs and any number of UEs in any suitable arrangement. Also, the NodeB 101 could communicate directly with any number of UEs and provide those UEs with wireless broadband access to the network 130. Similarly, each NodeB 102-103 could communicate directly with the network 130 and provide UEs with direct wireless broadband access to the network 130. Further, the NodeB 101, 102, and/or 103 could provide access to other or additional external networks, such as external telephone networks or other types of data networks.

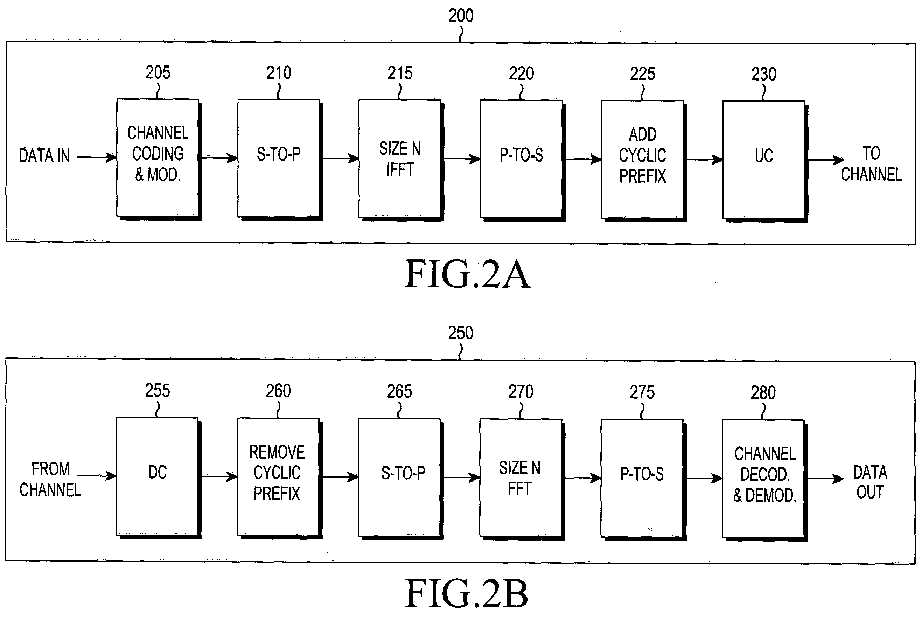

FIGURE 2A is a high-level diagram of a wireless transmit path. FIGURE 2B is a high-level diagram of a wireless receive path. In FIGURES 2A and 2B, the transmit path 200 may be implemented, e.g., in NodeB 102 and the receive path 250 may be implemented, e.g., in a UE, such as UE 116 of FIGURE 1. It will be understood, however, that the receive path 250 could be implemented in a NodeB (e.g., NodeB 102 of FIGURE 1) and the transmit path 200 could be implemented in a UE (such as UE 116). In certain embodiments, transmit path 200 and receive path 250 are configured to perform methods for scheduling over multiple transmission time intervals as described in embodiments of the present disclosure. Each of the eNBs 101-103 can include a processor, or processing circuitry, configured to perform methods for scheduling over multiple transmission time intervals as described in embodiments of the present disclosure.

Transmit path 200 includes channel coding and modulation block 205, serial-to-parallel (S-to-P) block 210, Size N Inverse Fast Fourier Transform (IFFT) block 215, parallel-to-serial (P-to-S) block 220, add cyclic prefix block 225, and up-converter (UC) 230. Receive path 250 comprises down-converter (DC) 255, remove cyclic prefix block 260, serial-to-parallel (S-to-P) block 265, Size N Fast Fourier Transform (FFT) block 270, parallel-to-serial (P-to-S) block 275, and channel decoding and demodulation block 280.

In transmit path 200, the channel coding and modulation block 205 receives a set of information bits, applies coding (such as turbo coding) and modulates (e.g., Quadrature Phase Shift Keying (QPSK) or Quadrature Amplitude Modulation (QAM)) the input bits to produce a sequence of frequency-domain modulation symbols. Serial-to-parallel block 210 converts (i.e., de-multiplexes) the serial modulated symbols to parallel data to produce N parallel symbol streams where N is the IFFT/FFT size used in NodeB 102 and UE 116. Size N IFFT block 215 then performs an IFFT operation on the N parallel symbol streams to produce time-domain output signals. Parallel-to-serial block 220 converts (i.e., multiplexes) the parallel time-domain output symbols from Size N IFFT block 215 to produce a serial time-domain signal. Add cyclic prefix block 225 then inserts a cyclic prefix to the time-domain signal. Finally, up-converter 230 modulates (i.e., up-converts) the output of add cyclic prefix block 225 to RF frequency for transmission via a wireless channel. The signal may also be filtered at baseband before conversion to RF frequency.

A transmitted RF signal arrives at UE 116 after passing through the wireless channel and reverse operations to those at NodeB 102 are performed at the UE 116. Down-converter 255 down-converts the received signal to baseband frequency and remove cyclic prefix block 260 removes the cyclic prefix to produce the serial time-domain baseband signal. The Serial-to-parallel block 265 converts the time-domain baseband signal to parallel time domain signals. Size N FFT block 270 then performs an FFT algorithm to produce N parallel frequency-domain signals. Parallel-to-serial block 275 converts the parallel frequency-domain signals to a sequence of modulated data symbols. Channel decoding and demodulation block 280 demodulates and then decodes the modulated symbols to recover the original input data stream.

Each of NodeBs 101-103 may implement a transmit path that is analogous to transmitting in the downlink to UEs 111-116 and may implement a receive path that is analogous to receiving in the uplink from UEs 111-116. Similarly, each one of UEs 111-116 may implement a transmit path corresponding to the architecture for transmitting in the uplink to NodeBs 101-103 and may implement a receive path corresponding to the architecture for receiving in the downlink from NodeBs 101-103. Each of the eNBs 101-103 can include processing circuitry configured to allocate resources to one or more UE's 111-116. For example eNB 102 can include allocator processing circuitry configured to allocate a unique carrier indicator to UE 116.

Each of the components in FIGURES 2A and 2B can be implemented using only hardware or using a combination of hardware and software/firmware. As a particular example, at least some of the components in FIGURES 2A and 2B can be implemented in software while other components may be implemented by configurable hardware (e.g., one or more processors) or a mixture of software and configurable hardware. In particular, it is noted that the FFT block 270 and the IFFT block 215 described in this disclosure document may be implemented as configurable software algorithms, where the value of Size N may be modified according to the implementation.

Furthermore, although described as using FFT and IFFT, this is by way of illustration only and should not be construed to limit the scope of the disclosure. It will be appreciated that in an alternate embodiment of the disclosure, the FFT functions and the IFFT functions may easily be replaced by Discrete Fourier Transform (DFT) functions and Inverse Discrete Fourier Transform (IDFT) functions, respectively. It will be appreciated that for DFT and IDFT functions, the value of the N variable may be any integer number (i.e., 1, 2, 3, 4, etc.), while for FFT and IFFT functions, the value of the N variable may be any integer number that is a power of two (i.e., 1, 2, 4, 8, 16, etc.).

Although FIGURES 2A and 2B illustrate examples of wireless transmit and receive paths, various changes may be made to FIGURES 2A and 2B. For example, various components in FIGURES 2A and 2B could be combined, further subdivided, or omitted and additional components could be added according to particular needs. Also, FIGURES 2A and 2B are meant to illustrate examples of the types of transmit and receive paths that could be used in a wireless network. Any other suitable architectures could be used to support wireless communications in a wireless network.

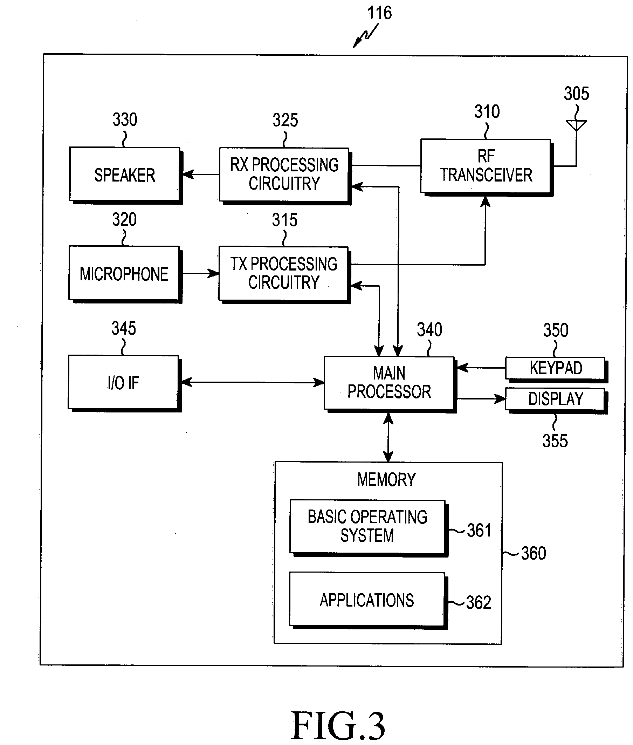

FIGURE 3 illustrates a UE according to embodiments of the present disclosure. The embodiment of UE 116 illustrated in FIGURE 3 is for illustration only, and the UEs 111-115 of FIGURE 1 could have the same or similar configuration. However, UEs come in a wide variety of configurations, and FIGURE 3 does not limit the scope of this disclosure to any particular implementation of a UE.

UE 116 includes antenna 305, radio frequency (RF) transceiver 310, transmit (TX) processing circuitry 315, microphone 320, and receive (RX) processing circuitry 325. UE 116 also comprises speaker 330, main processor 340, input/output (I/O) interface (IF) 345, keypad 350, display 355, and memory 360. Memory 360 further comprises basic operating system (OS) program 361 and a plurality of applications 362.

Radio frequency (RF) transceiver 310 receives from antenna 305 an incoming RF signal transmitted by a NodeB of wireless network 100. Radio frequency (RF) transceiver 310 down-converts the incoming RF signal to produce an intermediate frequency (IF) or a baseband signal. The IF or baseband signal is sent to receiver (RX) processing circuitry 325 that produces a processed baseband signal by filtering, decoding, and/or digitizing the baseband or IF signal. Receiver (RX) processing circuitry 325 transmits the processed baseband signal to speaker 330 (such as for voice data) or to main processor 340 for further processing (such as for web browsing data).

Transmitter (TX) processing circuitry 315 receives analog or digital voice data from microphone 320 or other outgoing baseband data (e.g., web data, e-mail, interactive video game data) from main processor 340. Transmitter (TX) processing circuitry 315 encodes, multiplexes, and/or digitizes the outgoing baseband data to produce a processed baseband or IF signal. Radio frequency (RF) transceiver 310 receives the outgoing processed baseband or IF signal from transmitter (TX) processing circuitry 315. Radio frequency (RF) transceiver 310 up-converts the baseband or IF signal to a radio frequency (RF) signal that is transmitted via antenna 305.

The Main processor 340 can be include one or more processors and executes basic operating system (OS) program 361 stored in memory 360 in order to control the overall operation of wireless subscriber station 116. In one such operation, main processor 340 controls the reception of forward channel signals and the transmission of reverse channel signals by radio frequency (RF) transceiver 310, receiver (RX) processing circuitry 325, and transmitter (TX) processing circuitry 315, in accordance with well-known principles. Main processor 340 can include processing circuitry configured to allocate one or more resources. For example Main processor 340 can include allocator processing circuitry configured to allocate a unique carrier indicator and detector processing circuitry configured to detect a PDCCH scheduling a PDSCH reception of a PUSCH transmission in one of the C carriers. In some embodiments, the main processor 340 includes at least one microprocessor or microcontroller.

Main processor 340 is capable of executing other processes and programs resident in memory 360, such as operations for scheduling over multiple transmission time intervals as described in embodiments of the present disclosure. For example, main processor 340 can be configured to transmit PDCCHs or PDSCHs or configured to receive PUSCHs or Physical Uplink Control CHannels (PUCCHs). A PDCCH conveys a DCI format scheduling one or multiple PDSCHs or PUSCHs transmission in one or multiple respective TTIs, wherein a PUCCH conveys Uplink Control Information (UCI) such as acknowledgement information to receptions by the UE of data blocks conveyed by one or more PDSCH transmissions. Main processor 340 can move data into or out of memory 360, as required by an executing process. In some embodiments, the main processor 340 is configured to execute a plurality of applications 362, such as applications for MU-MIMO communications, including obtaining control channel elements of PDCCHs. Main processor 340 can operate the plurality of applications 362 based on OS program 361 or in response to a signal received from BS 102. Main processor 340 is also coupled to I/O interface 345. I/O interface 345 provides subscriber station 116 with the ability to connect to other devices such as laptop computers and handheld computers. I/O interface 345 is the communication path between these accessories and main controller 340.

Main processor 340 is also coupled to keypad 350 and display unit 355. The operator of subscriber station 116 uses keypad 350 to enter data into subscriber station 116. Display 355 may be a liquid crystal display capable of rendering text and/or at least limited graphics from web sites. Alternate embodiments may use other types of displays.

The memory 360 is coupled to the main processor 340. Part of the memory 360 could include a random access memory (RAM), and another part of the memory 360 could include a Flash memory or other read-only memory (ROM).

Although FIGURE 3 illustrates one example of UE 116, various changes may be made to FIGURE 3. For example, various components in FIGURE 3 could be combined, further subdivided, or omitted and additional components could be added according to particular needs. As a particular example, the main processor 340 could be divided into multiple processors, such as one or more central processing units (CPUs) and one or more graphics processing units (GPUs). Also, while FIGURE 3 illustrates the UE 116 configured as a mobile telephone or smartphone, UEs could be configured to operate as other types of mobile or stationary devices.

A NodeB transmits a PDCCH in units referred to as Control Channel Elements (CCEs). The NodeB, such as NodeB 102 or NodeB 103, transmits one or more of multiple types of RS including a UE-Common RS (CRS), a Channel State Information RS (CSI-RS), and a DeModulation RS (DMRS). The CRS is transmitted over substantially a DL system BandWidth (BW) and can be used by the UEs, such as UE 116, to demodulate data or control signals or to perform measurements. The UE 116 can determine a number of NodeB antenna ports from which a CRS is transmitted through a broadcast channel transmitted from the NodeB. To reduce the CRS overhead, the NodeB can transmit a CSI-RS with a smaller density in the time and/or frequency domain than the CRS. The UE can determine the CSI-RS transmission parameters through higher layer signaling from the NodeB. The DMRS is transmitted only in the BW of a respective PDSCH and a UE can use the DMRS to demodulate the information in the PDSCH.

A PDSCH or a PUSCH transmission can be in response to dynamic scheduling or to Semi-Persistent Scheduling (SPS). With dynamic scheduling, the NodeB conveys to the UE a DCI format through a respective PDCCH. The contents of a DCI format, and consequently its size, depend on a Transmission Mode (TM). The UE is configured for a respective PDSCH or PUSCH transmission. With SPS, a PDSCH or a PUSCH transmission is configured to the UE, by the NodeB, through higher layer signaling, such as Radio Resource Control (RRC) signaling, and occurs at predetermined Transmission Time Intervals (TTIs) and with predetermined parameters as informed by the higher layer signaling.

The PDCCH can be one of two types. A first type is transmitted in a number of first symbols of a TTI and practically over an entire DL system BW. A second type is transmitted over all symbols of a TTI, after a number of TTI symbols typically used to transmit PDCCH of the first type, and over Resource Blocks (RBs) of a DL system BW. The second PDCCH type will be referred to as EPDCCH.

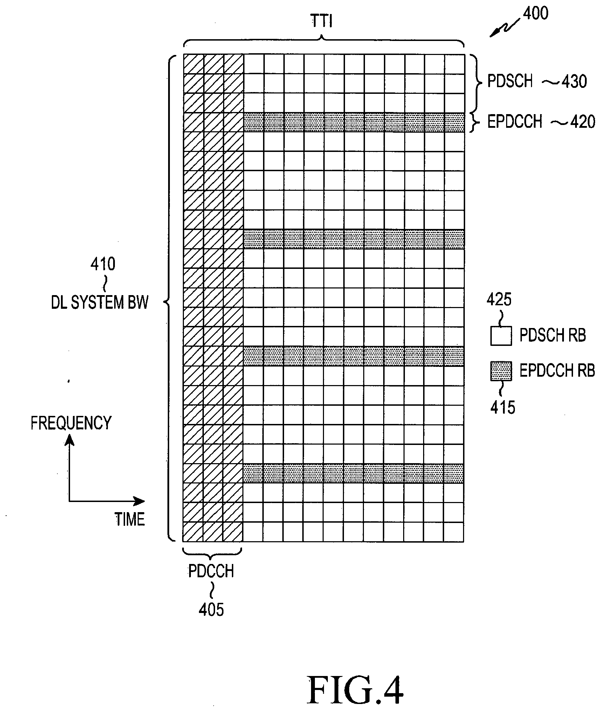

FIGURE 4 illustrates a structure for PDCCH transmissions and for EPDCCH transmissions according to embodiments of the present disclosure. The PDCCH transmissions 405 are over a first number of TTI symbols 400 and practically over an entire DL system BW 410. EPDCCH transmissions 415 are over a remaining number of TTI symbols and over RBs of a DL system BW 420. Remaining RBs 430 of the DL system BW over a TTI are used to transmit PDSCH 425. A unit of one RB over one TTI will be referred to as Physical RB (PRB). The number of RBs in a DL system BW is denoted as $N_{RB}^{DL}$ and the number of RBs in an UL system BW is denoted as $N_{RB}^{UL}$.

As a PDCCH transmission 405 is over an entire DL system BW 410, PDCCH detection is based on channel estimation and coherent demodulation using a CRS. Conversely, as EPDCCH transmission 415 is over PRBs, EPDCCH detection is based on channel estimation and coherent demodulation using a DMRS. In order to allow flexible system operation in various scenarios, cell-specific signaling such as the CRS may be omitted. In such cases, DL control signaling relies on EPDCCH 415.

A DCI format conveys multiple information fields that are associated with a respective PDSCH or PUSCH transmission. Table 1 lists the fields in a first DCI format, which will be referred to as DCI format 0, and schedules a PUSCH conveying one data TB, and in a second DCI format, which will be referred to as DCI format 4, and schedules a PUSCH conveying one or two data TBs. Table 2 lists the fields in a first DCI format, which will be referred to as DCI format 1A, and schedules a PDSCH conveying one data TB, and in a second DCI format, which will be referred to as DCI format 2D, and schedules a PUSCH conveying one or two data TBs. The description and functionality for each of the information fields in Table 1 and Table 2 are provided in REF2 and, for some information fields, will be further subsequently discussed.

Table 1: Information Fields in DCI Format 0 and DCI Format 4.

| Information Field | Number of Bits | |
|---|---|---|
| | DCI Format 0 | DCI Format 4 |
| Differentiation Flag | 1 | - |
| Frequency Hopping | 1 | 1 |
| Resource Allocation | $\left\lceil \log_2(N_{RB}^{UL}(N_{RB}^{UL}+1)/2) \right\rceil$ | $\left\lceil \log_2(N_{RB}^{UL}(N_{RB}^{UL}+1)/2) \right\rceil$ |
| MCS and RV for TB1 | 5 | 5 |
| NDI for TB 1 | 1 | 1 |

(continued)

| Information Field | Number of Bits | |
|---|---|---|
| | DCI Format 0 | DCI Format 4 |
| MCS and RV for TB2 | - | 5 |
| NDI for TB2 | - | 1 |
| TPC | 2 | 2 |
| CSI | 3 | 3 |
| UL Index (TDD UL-DL Configuration 0) | 2 | 2 |
| UL DAI (TDD) | 2 | 2 |
| CSI Request | 1 or 2 | 1 or 2 |
| SRS request | 0 or 1 | 2 |
| Resource Allocation Type | 1 | 1 |
| Precoding Information | - | 3 |
| CRC (C-RNTI) | 16 | 16 |

Table 2: Information Fields in DCI Format 1A and DCI Format 2D.

| Information Field | Number of Bits | |
|---|---|---|
| | DCI Format 1A | DCI Format 2D |
| Differentiation Flag | 1 | - |
| Resource Allocation Type | 1 | 1 |
| Resource Allocation ($P$ depends on DL system BW) | $\left\lceil \log_2(N_{RB}^{DL}(N_{RB}^{DL}+1)/2) \right\rceil$ | $\left\lceil N_{RB}^{DL}/P \right\rceil$ |
| TPC | 2 | 2 |
| DL DAI (TDD) | 2 | 2 |
| HARQ process number | - | 3 (FDD), 4 (TDD) |
| Antenna ports, scrambling identity, number of layers | | 3 |
| SRS request | - | 0 (FDD), 1 (TDD) |
| MCS for TB1 | 5 | 5 |
| RV for TB 1 | 2 | 2 |
| NDI for TB1 | 1 | 1 |
| MCS for TB2 | - | 5 |
| RV for TB2 | | 2 |
| NDI for TB2 | - | 1 |
| PDSCH RE Mapping and Quasi-Co-Location Indicator | - | 3 |
| HARQ-ACK Resource Offset (EPDCCH only) | 2 | 2 |
| CRC (C-RNTI) | 16 | 16 |

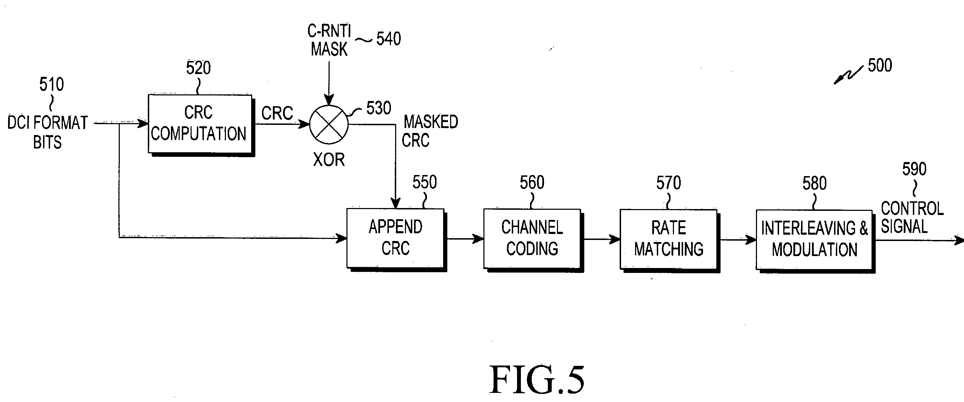

FIGURE 5 illustrates an encoding process 500 for a DCI format conveyed by a PDCCH or an EPDCCH according to embodiments of the present disclosure. The embodiment of the encoding process 500 shown in FIGURE 5 is for illustration only. Other embodiments could be used without departing from the scope of this disclosure.

The NodeB, such as NodeB 102, separately codes and transmits each DCI format in a respective PDCCH/EPDCCH. A Cell Radio Network Temporary Identifier (C-RNTI) for UE 116 for which a DCI format is intended for masks a Cyclic Redundancy Check (CRC) of a DCI format codeword in order to enable the UE 116 to identify that a particular DCI format is intended for the UE 116. The CRC of (non-coded) DCI format bits 510 is computed using a CRC computation operation 520, and the CRC is then masked using an exclusive OR (XOR) operation 530 between CRC and C-RNTI bits 540. The XOR operation 530 is defined as: XOR(0,0) = 0, XOR(0,1) = 1, XOR(1,0) = 1, XOR(1,1) = 0. The masked CRC bits are appended to DCI format information bits using a CRC append operation 550. Channel coding is performed using a channel coding operation 560 (such as an operation using a convolutional code). Thereafter, a rate matching operation 570 is applied to allocated resources. The processing circuitry then performs an interleaving and a modulation 580 operation and transmits the output control signal 590 to UE 116. In the present example, both a CRC and a RNTI include 16 bits.

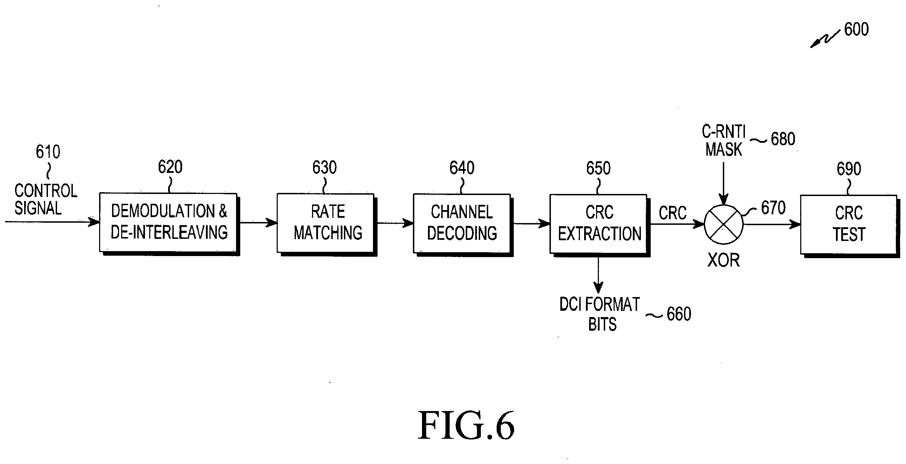

FIGURE 6 illustrates a decoding process 600 for a DCI format conveyed by a PDCCH or an EPDCCH according to embodiments of the present disclosure. The embodiment of the decoding process 600 shown in FIGURE 6 is for illustration only. Other embodiments could be used without departing from the scope of this disclosure.

The UE 116 receives a control signal 610, which can be the control signal 590. The UE 116 demodulates the received control signal 610 and the resulting bits are de-interleaved at operation 620. The UE 116 restores a rate matching applied at a NodeB transmitter through operation 630. Subsequently, in channel decoding 640, the UE 116 decodes data. After decoding the data, the UE 116 performs CRC extraction 650 and obtains DCI format information bits 660. Thereafter, the UE 116 de-masks 670 the CRC by applying the XOR operation with a UE C-RNTI 680. Then, UE 116 performs a CRC test 690 to confirm the operation. If the CRC test passes, UE 116 determines that a DCI format corresponding to the received control signal 610 is valid and determines parameters for signal reception or signal transmission. If the CRC test does not pass, UE 116 disregards the presumed DCI format.

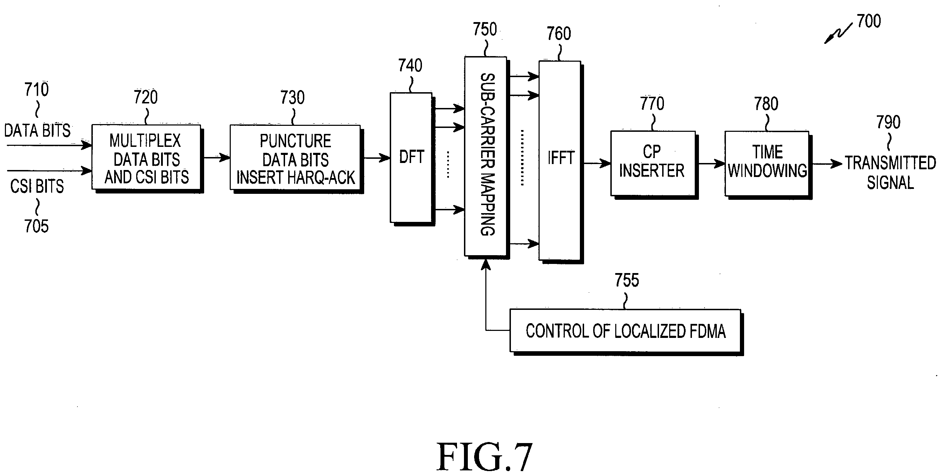

FIGURE 7 illustrates a PUSCH transmission 700 according to embodiments of the present disclosure. The embodiment of the PUSCH transmission 700 shown in FIGURE 7 is for illustration only. Other embodiments could be used without departing from the scope of this disclosure.

The Coded CSI bits 705 and coded data bits 710 are multiplexed 720 by UE 116. If HARQ-ACK bits are also multiplexed, the UE 116 punctures 730 data bits by HARQ-ACK bits in some PUSCH symbols. The UE 116 performs a Discrete Fourier Transform (DFT) 740 of combined data bits and UCI bits. The UE 116 then performs sub-carrier mapping 750 such that REs corresponding to an assigned PUSCH transmission BW are selected by a control of localized FDMA process 755. The UE 116 performs an Inverse Fast Fourier Transform (IFFT) 760. The UE 116 then applies a Cyclic Prefix (CP) insertion 770, and filtering 780 to a transmitted signal 790. A PUSCH transmission is assumed to be in accordance with the DFT Spread Orthogonal Frequency Multiple Access (DFT-S-OFDM) principle.

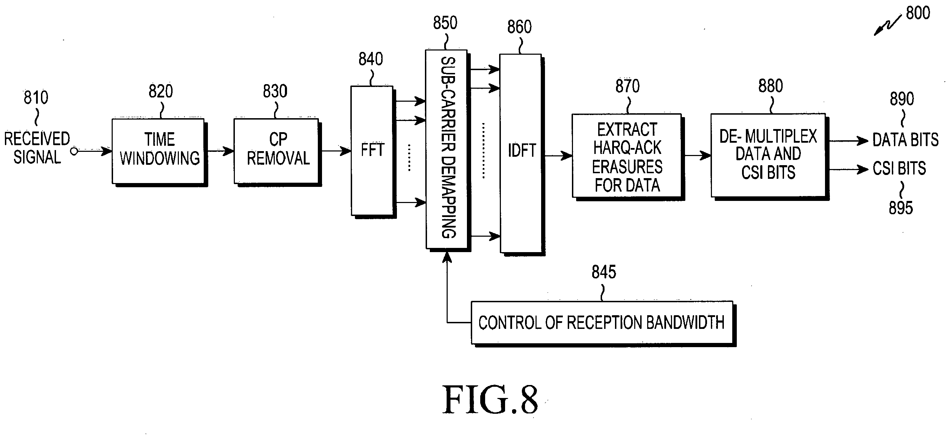

FIGURE 8 illustrates a PUSCH reception 800 process according to embodiments of the present disclosure. The embodiment of the PUSCH reception 800 process shown in FIGURE 8 is for illustration only. Other embodiments could be used without departing from the scope of this disclosure.

Receive processing circuitry, such as in NodeB 102, receives a signal 810. The processing circuitry filters 820 the received signal 810 and removes a CP 830. Then the processing circuitry applies a Fast Fourier Transform (FFT) 840, selects REs for a reception BW through a sub-carrier demapping 850 process using a control of reception bandwidth 845, and applies an Inverse DFT (IDFT) 860. The processing circuitry then performs an extraction of HARQ-ACK bits and substitution with erasures 870, and de-multiplexing 880 of data bits 890 and CSI bits 895.

For a PDSCH, transmitter and receiver structures are similar to those for a PUSCH with a main exception that the IDFT and DFT blocks are respectively omitted as the DL transmissions are assumed to be based on Orthogonal Frequency Division Multiplexing (OFDM). Moreover, DCI and PDSCH may not be multiplexed in a same PRB.

In a Time Division Duplex (TDD) system, a communication direction in some TTIs is in the DL and in some other TTIs is in the UL. Table 3 lists indicative UL-DL configurations over a period of 10 TTIs which is also referred to as frame period. "D" denotes a DL TTI, "U" denotes an UL TTI, and "S" denotes a special TTI, which includes a DL transmission field referred to as DwPTS, a Guard Period (GP), and an UL transmission field referred to as UpPTS. Several combinations exist for the duration of each field in a special TTI subject to the condition that the total duration is one TTI.

Table 3: TDD UL-DL configurations

| TDD UL-DL Configuration | DL-to-UL Switch-point periodicity | TTI number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |

(continued)

| TDD UL-DL Configuration | DL-to-UL Switch-point periodicity | TTI number | | | | | | | | | |
|---|---|---|---|---|---|---|---|---|---|---|---|
| | | 0 | 1 | 2 | 3 | 4 | 5 | 6 | 7 | 8 | 9 |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

For UL-DL configuration 0, there are more UL TTIs (including UpPTS) than DL TTIs (including DwPTS). Then, to enable PUSCH scheduling in multiple UL TTIs, a respective DCI format transmitted in a DL TTI can indicate PUSCH transmissions in one or more respective TTIs (multi-TTI scheduling) to UE 116 by including an "UL index" field. For example, for two UL TTIs where PUSCH transmissions are associated with scheduling in a same DL TTI and an UL index field of 2 bits, an UL index value of '10' can indicate PUSCH transmission in a first UL TTI (conventional scheduling), an UL index value of '01' can indicate PUSCH transmission in a second UL TTI (cross-TTI scheduling), and an UL index value of '1 1' can indicate PUSCH transmission in both the first UL TTI and the second UL TTI (multi-TTI scheduling).

For multi-TTI scheduling, each PDSCH or each PUSCH transmission contains self-decodable data TBs and with separate CRC check and HARQ signaling. In addition to scheduling PUSCH or PDSCH transmissions in respective TTIs where associated DL control signaling is not supported, multi-TTI scheduling or cross-TTI scheduling can also be used to reduce DL control signaling overhead and support for such scheduling can also be extended in the DL. As DL control overhead reduction is another objective of multi-TTI scheduling or cross-TTI scheduling, a size of a respective DCI format should not be unnecessarily increased.

In response to a detection of one data TB or two data TBs in a PUSCH, NodeB 102 can transmit a Physical HARQ Indicator CHannel (PHICH) providing HARQ-ACK information regarding a correct or incorrect detection of the data TB(s). Similar to EPDCCH, the EPHICH also can be defined. Similar to the PDCCH, the PHICH is transmitted in resource elements widely distributed over a DL system BW and the UE 116 relies for a PHICH detection on a CRS. The PHICH resource is identified by the index pair $(n_{\text{PHICH}}^{\text{group}}, n_{\text{PHICH}}^{\text{seq}})$ where $n_{\text{PHICH}}^{\text{group}}$ is the PHICH group number and $n_{\text{PHICH}}^{\text{seq}}$ is the orthogonal sequence index within the group as defined as in Equation 1:

$$n_{\text{PHICH}}^{\text{group}} = (I_{\text{PRB\_RA}} + n_{\text{DMRS}}) \bmod N_{\text{PHICH}}^{\text{group}} + I_{\text{PHICH}} N_{\text{PHICH}}^{\text{group}}$$
$$n_{\text{PHICH}}^{\text{seq}} = (\lfloor I_{\text{PRB\_RA}} / N_{\text{PHICH}}^{\text{group}} \rfloor + n_{\text{DMRS}}) \bmod 2N_{\text{SF}}^{\text{PHICH}}$$

$$(1)$$

where

$n_{\text{DMRS}}$ is mapped from the CSI field in the most recent PDCCH/EPDCCH with UL DCI format for the data TB(s) associated with the corresponding PUSCH

$N_{\text{SF}}^{\text{PHICH}}$ is the spreading factor size used for PHICH modulation

$$I_{PRB\_RA} = \begin{cases} I_{PRB\_RA}^{lowest\_index} & \text{for the first TB of a PUSCH with associated PDCCH/EPDCCH or for the case of no associated PDCCH when the number of negatively acknowledged TBs is not equal to the number of TBs indicated in the most recent PDCCH/EPDCCH associated with the corresponding PUSCH} \\ \\ I_{PRB\_RA}^{lowest\_index} + 1 & \text{for a second TB of a PUSCH with associated PDCCH/EPDCCH} \end{cases}$$

where $I_{PRB\_RA}^{lowest\_index}$ is the lowest RB index in the first slot of the corresponding PUSCH transmission

$N_{PHICH}^{group}$ is the number of PHICH groups configured by higher layers (as described in [1])

$$I_{PHICH} = \begin{cases} 1 & \text{for TDD UL/DL configuration 0 with PUSCH transmission in TTI n = 4 or 9} \\ 0 & \text{otherwise} \end{cases}$$

A conventional PUSCH multi-TTI transmission when the UL index field in an UL DCI format consists of 2 bits and PDCCH/EPDCCH is transmitted in special TTIs is as follows. For TDD UL-DL configurations 1-6, UE 116 upon detection of a PDCCH/EPDCCH with UL DCI format and/or a PHICH transmission in TTI $n$ intended for UE 116, adjusts the corresponding PUSCH in TTI $n+k$, with $k$ given in Table 4, according to the PDCCH/EPDCCH and PHICH information. For TDD UL-DL configuration 0, UE 116 upon detection of a PDCCH/EPDCCH with UL DCI format and/or a PHICH in TTI $n$ intended for UE 116, adjusts a corresponding PUSCH in TTI $n+k$ if the MSB of the UL index in the PDCCH/EPDCCH with UL DCI format is set to 1 or PHICH is received in TTI $n=0$ or 5 in the resource corresponding to $I_{PHICH}=0$, with $k$ given in Table 4. If, for TDD UL-DL configuration 0, the LSB of the UL index in the DCI format 0/4 is set to 1 in TTI $n$ or a PHICH is received in TTI $n=0$ or 5 in the resource corresponding to $I_{PHICH}=1$, or PHICH is received in TTI $n=1$ or 6, UE 116 adjusts the corresponding PUSCH in TTI $n+7$. If, for TDD UL-DL configuration 0, both the MSB and LSB of the UL index in the PDCCH/EPDCCH with UL DCI format are set to 1 in TTI $n$, UE 116 adjusts the corresponding PUSCH in both TTIs $n+k$ and $n+7$, with $k$ given in Table 4.

Table 4: $k$ for TDD configurations 0-6

| TDD UL-DLConfiguration | TTI number $n$ | | | | | | | | | |
|:---:|:---:|:---:|:---:|:---:|:---:|:---:|:---:|:---:|:---:|:---:|
| | 0 | 1 | 2 | 3 | 4 | 5 | 6 | 7 | 8 | 9 |
| 0 | 4 | 6 | | | | 4 | 6 | | | |
| 1 | | 6 | | | 4 | | 6 | | | 4 |
| 2 | | | | 4 | | | | | 4 | |
| 3 | 4 | | | | | | | | 4 | 4 |
| 4 | | | | | | | | | 4 | 4 |
| 5 | | | | | | | | | 4 | |
| 6 | 7 | 7 | | | | 7 | 7 | | | 5 |

The association between the TTI and resource of a PHICH transmission and the TTI of a respective PUSCH transmission is as follows. For TDD UL-DL configurations 1-6, an HARQ-ACK on a PHICH in TTI $i$ is associated with a PUSCH in TTI $i-k$ as indicated in Table 5. For TDD UL-DL configuration 0, an HARQ-ACK on a PHICH resource corresponding to $I_{PHICH}=0$ in TTI $i$ is associated with a PUSCH in TTI $i-k$ as indicated in Table 5 and an HARQ-ACK on a PHICH resource corresponding to $I_{PHICH}=1$ in TTI $i$ is associated with a PUSCH in TTI $i-6$.

14

Table 5: *k* for TDD UL-DL configurations 0-6

| TDD UL-DL Configuration | TTI number *i* | | | | | | | | | |
|---|---|---|---|---|---|---|---|---|---|---|
| | 0 | 1 | 2 | 3 | 4 | 5 | 6 | 7 | 8 | 9 |
| 0 | 7 | 4 | | | | 7 | 4 | | | |
| 1 | | 4 | | | 6 | | 4 | | | 6 |
| 2 | | | | 6 | | | | | 6 | |
| 3 | 6 | | | | | | | | 6 | 6 |
| 4 | | | | | | | | | 6 | 6 |
| 5 | | | | | | | | | 6 | |
| 6 | 6 | 4 | | | | 7 | 4 | | | 6 |

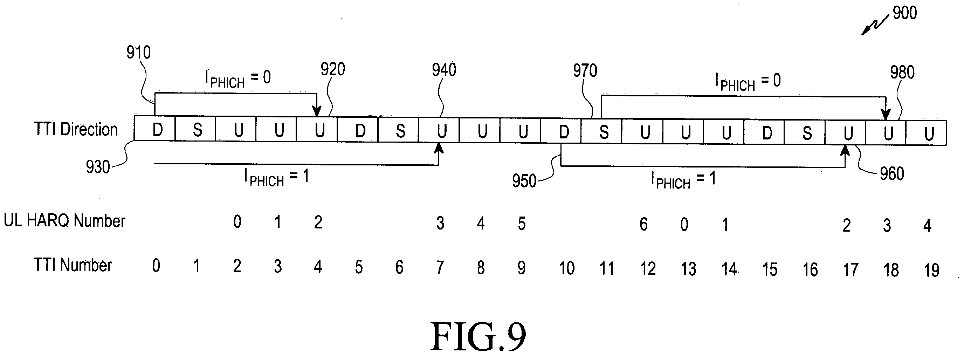

FIGURE 9 illustrates TTI associations 900 according to embodiments of the present disclosure. The embodiment of the TTI associations 900 shown in FIGURE 9 is for illustration only. Other embodiments could be used without departing from the scope of this disclosure. The example shown in FIGURE 9 illustrates an association between a TTI where UE 116 detects a PDCCH/EPDCCH conveying an UL DCI format or a PHICH/EPHICH and a TTI where UE 116 transmits a respective PUSCH and an association between a TTI where NodeB 102 transmits a PHICH/EPHICH in response to the respective PUSCH for TDD UL-DL configuration 0.

A PUSCH transmission from UE 116 in TTI 4 910, corresponding to UL HARQ process number 2, is triggered either by a detection of an UL DCI format having an UL index value of '10' or '11' in TTI 0 or by a PHICH detection with $I_{PHICH}$ = 0 in TTI 0 920. A PUSCH transmission from a UE in TTI 7 930, corresponding to UL HARQ process number 3, is triggered either by a detection of an UL DCI format having an UL index value of '01' in TTI 0 or by a PHICH detection with $I_{PHICH}$ = 1 in TTI 0 940. In response to a PUSCH transmission in TTI 4, NodeB 102 can transmit a PHICH with $I_{PHICH}$ = 1 to UE 116 in TTI 10 950 associated with a PUSCH transmission for UL HARQ process number 2 in TTI 17 960. In response to a PUSCH transmission in TTI 7, NodeB 102 can transmit a PHICH with $I_{PHICH}$ = 0 to UE 116 in TTI 11 970 associated with a PUSCH transmission for UL HARQ process number 3 in TTI 18 980.

A conventional approach for UL multi-TTI scheduling is not applicable if special TTIs for TDD UL-DL configuration 0 do not support DL control signaling. For example, for certain special TTI configurations among DwPTS, GP, and UpPTS, a number of DwPTS symbols can be small, such as for example 2 or 3, and EPDCCH/EPHICH may not be supported in such special TTIs (see also REF3). If PDCCH/PHICH signaling is also not supported in special TTI, for example in non-conventional carrier types not having CRS transmission, UL multi-TTI scheduling needs to be extended to 3 TTIs (from the conventional support of 2 TTIs). Also, for special TTI configurations without DL control signaling, UL multi-TTI scheduling needs to be supported for TDD UL-DL configuration 6.

When a DL TTI is designated for Multicast Broadcast Multimedia Service (MBMS) traffic, a conventional approach is to use a first two symbols of such DL TTI to transmit unicast DCI. Similar to special TTIs with a small number of DwPTS symbols, if PDCCH/PHICH signaling cannot supported due, for example, an absence of CRS and EPDCCH/EPHICH transmissions are not supported over a total of two DL TTI symbols, UL multi-TTI scheduling needs to extend over a maximum number of TTI equal to a maximum number of DL TTIs designated for MBMS traffic.

In response to a detection of one data TB or two data TBs in a PDSCH, UE 116 transmits HARQ-ACK information including 1 or 2 bits, respectively, in a PUCCH (or possibly in a PUSCH, if any exists) (see also REF3). For a Frequency Division Duplexing (FDD) system, a PUCCH resource $n_{PUCCH}$ for HARQ-ACK signal transmission is determined as in Equation 2:

$$n_{PUCCH} = n_{CCE} + f_{FDD}(other) + N_{PUCCH} \qquad (2)$$

where $n_{CCE}$ is a lowest CCE index of a PDCCH/EPDCCH scheduling a PDSCH and $N_{PUCCH}$ is an offset configured to UE 116 by NodeB 102. The value of the function $f_{FDD}$ (other) is zero if a PDSCH is scheduled by PDCCH and is determined at least by a HARQ-ACK Resource Offset (HRO) field included in a respective DCI format if the PDSCH is scheduled by EPDCCH.

For a Time Division Duplexing (TDD) system and UL-DL configurations with more DL TTIs than UL TTIs, HARQ-ACK signal transmissions in response to respective PDCCH/EPDCCH detections in more than one DL TTIs can occur in a same UL TTI. A number M of DL TTIs for which transmission of respective HARQ-ACK information occurs in a same UL TTI is referred to as bundling window of size M. A PUCCH resource $n_{PUCCH,m}$ for HARQ-ACK signal transmission in response to a PDCCH/EPDCCH detection by a UE in DL TTI $m$, $0 \leq m \leq M$-1, can be derived based on several approaches including based on the lowest CCE index, $n_{CCE,m}$, of the PDCCH/EPDCCH scheduling a respective PDSCH (see also REF3). Then, a PUCCH resource for HARQ-ACK signal transmission in response to a EPDCCH detection in, can be generally derived as in Equation 3:

$$n_{PUCCH,m} = n_{CCE,m} + \sum_{i=0}^{m-1} N_{CCE,i} + f_{TDD}(\text{other}) + N_{PUCCH} \tag{3}$$

where $N_{PUCCH}$ is an offset configured to the UE by the NodeB, $N_{CCE,i}$ is a total number of CCEs in DL TTI i, and $f_{TDD}$ (other) is a function of at least the HRO field included in the DCI format conveyed by the EPDCCH. It is noted that if multiple distinct sets of resources exist for transmissions of PDCCHs, the above parameters can also include an index for the respective set of resources (for both FDD and TDD). UE 116 can select a resource for an HARQ-ACK signal transmission depending on whether it correctly received data transport blocks in respective TTIs of a bundling window.

For both FDD and TDD systems, there is only a single PDCCH/EPDCCH performing DL multi-TTI scheduling or DL cross-TTI scheduling and PUCCH resources for transmissions of HARQ-ACK signals from UEs need to be accordingly defined.

For either DL or UL multi-TTI scheduling, a capability should be provided to NodeB 102 to suspend such scheduling, particularly if the number of respective TTIs is relatively large. In one example, based on CSI feedback from UE 116, NodeB 102 can determine that DL or UL channel conditions experienced by UE 116 have changed and consequently respective PDSCH or PUSCH transmission parameters assigned with DL or UL multi-TTI scheduling are no longer appropriate. In another example, the NodeB 102 scheduler can be informed of an arrival of new data traffic with higher priority, such as lower latency requirements, than the one it serves by multi-TTI scheduling.

Certain embodiments of the present disclosure consider a method for enabling UL multi-TTI scheduling or UL cross-TTI scheduling in more than 2 TTIs for a TDD system.

In a first approach, UL multi-TTI scheduling or UL cross-TTI scheduling is extended to support PUSCH transmissions in 3 TTIs at least for TDD configuration 0 and can also be extended to TDD UL-DL configurations 1 and 6 for example when PDCCH/EPDCCH transmissions do not exist for some configurations of special TTIs. Support of UL multi-TTI scheduling or UL cross-TTI scheduling over 3 TTIs is by increasing the size of the UL index field from 2 bits to 3 bits. All other fields in a respective UL DCI format are kept same as for a conventional operation of UL multi-TTI scheduling or UL cross-TTI scheduling over 2 TTIs. Table 6 describes an indicative interpretation for an UL index consisting of 3 bits and scheduling PUSCH over an UL window of 3 TTIs.

Table 6: Mapping of UL Index field to TTIs for PUSCH Transmission

| ULIndex | TTIs for PUSCH Transmission |
|---------|------------------------------|
| 000 | Reserved |
| 001 | First TTI |
| 010 | Second TTI |
| 011 | Third TTI |
| 100 | First TTI and Second TTI |
| 101 | First TTI and Third TTI |
| 110 | Second TTI and Third TTI |
| 111 | First TTI, Second TTI, and Third TTI |

In a second approach, UL multi-TTI scheduling or UL cross-TTI scheduling is extended for TDD configuration 6 to support PUSCH transmissions in 2 TTIs, for example when PDCCH/EPDCCH transmissions do not exist in special TTIs for some respective configurations, by combining an interpretation of an UL DAI field and of an UL index field. This is possible because for TDD UL-DL configuration 6 a maximum number of PDSCH transmissions for which HARQ-ACK information can be included in a PUSCH is one and therefore additional information can be provided by a DAI field that includes 2 bits.

Table 7 describes an indicative interpretation for a combined UL DAI and UL index field that includes 2 bits for scheduling PUSCH over an UL multi-TTI window of 2 TTIs. The mapping in Table 7 corresponds to cross-TTI scheduling as one PUSCH transmission is scheduled for each value of a combined (UL DAI, UL Index) field. However, alternative mappings are also possible, such as for example mapping the '01' and '11' code-points to scheduling PUSCH in both the first TTI and the second TTI. The mapping can be configurable to a UE by a NodeB using higher layer signaling.

Table 7: Mapping of DAI field UL Index field to TTIs for PUSCH Transmission

| (UL DAI, UL Index) | Number of PDSCH for HARQ-ACK information, TTIs for PUSCH Transmission |
|---|---|
| 00 | 0, First TTI |
| 01 | 0, Second TTI |
| 10 | 1, First TTI |
| 11 | 1, Second TTI |

In a third approach, PDCCH transmissions are maintained in a DwPTS of special TTIs, at least for configurations not supporting EPDCCH, while only EPDCCH transmissions are supported in all other cases. Then, a conventional UL index functionality can be maintained.

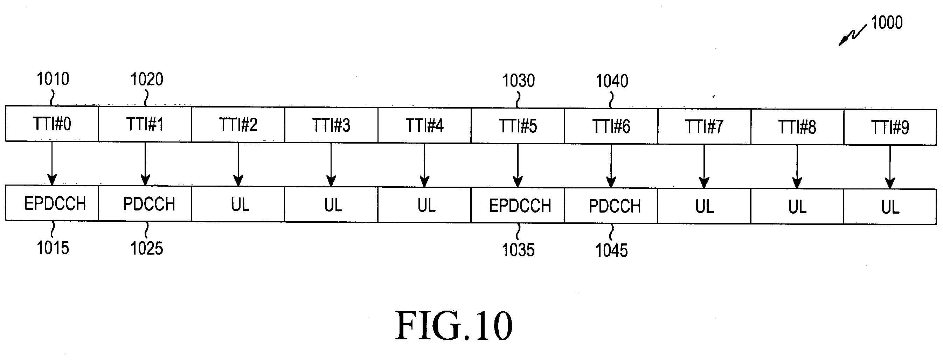

FIGURE 10 illustrates a process 1000 for using an EPDCCH in DL TTIs and using a PDCCH in special TTIs, at least for configurations of special TTIs that do not support EPDCCH transmissions according to embodiments of the present disclosure. The embodiment of the process 1000 shown in FIGURE 10 is for illustration only. Other embodiments could be used without departing from the scope of this disclosure.

A first TTI 1010 is a DL TTI and DCI formats are conveyed only by EPDCCH 1015. A second TTI 1020 is a special TTI and DCI formats are conveyed only by PDCCH 1025. A third TTI (e.g., TTI#5) 1030 is a DL TTI and DCI formats are conveyed only by EPDCCH 1035. A fourth TTI (e.g., TTI#6) 1040 is a special TTI and DCI formats are conveyed only by PDCCH 1045.

In a fourth approach, a use of the conventional 2-bit UL index is extended at least to TDD UL-DL configuration 6. The applicability of the conventional 2-bit UL index is also extended for TDD UL-DL configuration 0 to include scheduling in a third UL TTI, in addition to scheduling in a first UL TTI and/or in a second UL TTI. This is achieved by using the one available mapping value to indicate scheduling in a third UL TTI. For TDD UL-DL configuration 0, Table 8 describes an interpretation for an UL index consisting of 2 bits and scheduling PUSCH over an UL window of 3 TTIs. For TDD UL-DL configuration 6, the mapping can be as in Table 8 but with the first entry being undefined as UL multi-TTI scheduling needs to extend over at most 2 UL TTIs.

Table 8: Mapping of UL Index field to TTIs for PUSCH Transmission

| L Index | TTIs for PUSCH Transmission |
|---|---|
| 0 | Third TTI |
| 1 | First TTI |
| 0 | Second TTI |
| 1 | First and Second TTI |

Certain embodiments of the present disclosure consider a formation of a DL index field in a DL DCI format for DL multi-TTI scheduling for a TDD system and a HARQ operation for DL multi-TTI scheduling.

While a direct approach for providing a DL index field for DL multi-TTI scheduling is to include a respective number of bits in DCI formats scheduling PDSCH transmissions (DL DCI formats), in some cases a respective additional overhead can either be avoided by utilizing existing bits in a respective DL DCI format or support of DL multi-TTI scheduling can be avoided for some DL DCI formats.

In a TDD system, a DL DCI format includes a DL DAI field which indicates a number for the DL DCI format transmitted to a UE is a same bundling window. For example, for a bundling window size of $M$=4 TTIs, a DL DAI field has a value of '00' in a first DL DCI format transmitted to UE 116 in a bundling window, has a value '01' in a second DL DCI format transmitted to UE 116 in a next TTI of a same bundling window, and so on.

When UE 116 is configured for DL multi-TTI scheduling, a conventional interpretation of a DL DAI field in a DL DCI format is no longer applicable if DL multi-TTI scheduling is over a respective bundling window. Instead, certain embodiments consider that a value of a DL DAI field other than '00' can indicate a number of TTIs for PDSCH reception with DL multi-TTI scheduling (while a value of '00' still indicates PDSCH scheduling only in a same TTI as the one of a respective PDCCH/EPDCCH detection). Therefore, in this case, a DL DAI field in a DL DCI format can serve entirely or as part of a DL index field for DL multi-TTI scheduling.

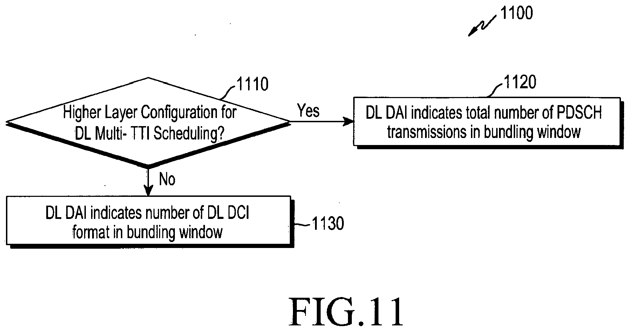

FIGURE 11 illustrates a process 1100 for using a DL DAI field for multi-TTI PDSCH scheduling over a bundling window according to embodiments of the present disclosure. While the flow chart depicts a series of sequential steps, unless explicitly stated, no inference should be drawn from that sequence regarding specific order of performance, performance of steps or portions thereof serially rather than concurrently or in an overlapping manner, or performance of the steps depicted exclusively without the occurrence of intervening or intermediate steps. The process depicted in the example depicted is implemented by a transmitter chain in, for example, a mobile station.

In block 1110, UE 116 interprets a DL DAI field in a DL DCI format depending on whether it is configured by higher layer signaling for DL multi-TTI scheduling. If UE 116 is configured for DL multi-TTI scheduling, in block 1120, UE 116 considers that the DL DAI field in the DL DCI format indicates a total number of PDSCH transmissions in a bundling window. Alternatively, if UE 116 is not configured for DL multi-TTI scheduling, in block 1130, UE 116 considers that the DL DAI field in the DL DCI format has its conventional functionality and indicates a number of a DL DCI format transmitted to the UE within a same bundling window.

UE 116 also can monitor two different DCI formats in a TTI for PDSCH scheduling and NodeB 102 can schedule a PDSCH by transmitting one of the two DCI formats in a respective PDCCH. The first DCI format corresponds to a configured PDSCH transmission mode to UE 116 and a respective PDCCH is transmitted in a UE-specific search space. The second DCI format corresponds to a default mode for a PDSCH transmission and a respective PDCCH is transmitted either in a UE-common search space or in a UE-specific search space. Certain embodiments further consider that multi-TTI PDSCH scheduling can be restricted only for the first DCI format or only for the first DCI format and for the second DCI format when a respective PDCCH for the second DCI format is transmitted in the UE-specific search space (but not in the UE-common search space).

Regarding a HARQ operation with DL multi-TTI scheduling, whether asynchronous HARQ operation is allowed for DL multi-TTI scheduling as it is assumed for DL single-TTI scheduling is a main consideration.

If HARQ operation with DL multi-TTI scheduling is asynchronous then, in addition to an inclusion of an DL index in DCI formats for DL multi-TTI scheduling (for example, explicit for FDD, implicit through a use of a DL DAI field in TDD as it was previously described), a separate HARQ field, a separate RV field, and a separate NDI field is needed for each TTI (assuming same data MCS for all TTIs; otherwise, a separate data MCS fields is also needed for each TTI).

However, as an actual DL multi-TTI scheduling window can be variable, depending on a value indicated by a DL index field, in order to avoid having UE 116 perform multiple PDCCH/EPDCCH decoding operations for each possible length of a DL DCI format depending on a DL multi-TTI scheduling window, a maximum DL multi-TTI window size can be assumed. For example, for a DL index field including 2 bits and indicating DL multi-TTI scheduling for a maximum of 4 TTIs and up to 8 HARQ processes, 3 additional HARQ fields (each including 3 bits), 3 additional RV fields (each including 2 bits), and 3 additional NDI fields (each including 1 bit) need to be included for each data TB in a DL DCI format. Then, for DCI format 2D, an additional payload to support DL multi-TTI scheduling is 27 bits.

As a primary motivation for DL multi-TTI scheduling is a need to reduce DL control signaling overhead, increasing a DL DCI format payload by a large number of bits, such as 27 bits, is undesirable.

Two alternatives exist for avoiding this disadvantage. A first alternative is to support synchronous HARQ for DL multi-TTI scheduling, similar to UL single-TTI or UL multi-TTI scheduling and unlike DL single-TTI scheduling. As a consequence, when UE 116 is configured for multi-TTI scheduling of PDSCHs having a transmission mode, a respective DCI format size can be smaller than a DCI format size when the UE is configured for DL single-TTI scheduling of a PDSCH having the transmission mode.

A second alternative is to limit DL multi-TTI scheduling only to initial transmissions of data TBs and apply DL single-TTI scheduling for retransmissions of data TBs.

For DL multi-TTI scheduling by EPDCCH, if a resource allocation for a respective PDSCH includes PRBs where an EPDCCH triggering DL multi-TTI scheduling was detected, there is an ambiguity whether UE 116 should include these PRBs for PDSCH reception in TTIs of a DL multi-TTI window other than a TTI of EPDCCH detection (where these RPBs are excluded from PDSCH reception).

In a first approach, a behavior of UE 116 with respect to PDSCH reception in these PRBs (include or exclude these PRBs from PDSCH reception) is configured by NodeB 106 through higher layer signaling including 1 bit.

In a second approach, UE 116 includes these PRBs for PDSCH reception in subsequent TTIs if an EPDCCH transmission is localized in one PRB (as NodeB 102 can avoid this PRB for EPDCCH transmissions in subsequent TTIs) while UE 116 excludes these PRBs for PDSCH reception in subsequent TTIs if a EPDCCH transmission is distributed in multiple PRBs.

Certain embodiments of the disclosure consider an association between a TTI where a PDCCH/EPDCCH conveying an UL DCI format or a PHICH/EPHICH is detected by UE 116 and a TTI where UE 116 transmits a PUSCH.

Without considering optimizations for reducing DL control overhead, a necessity for extending UL multi-TTI scheduling to more than 2 TTIs is for TDD UL-DL configuration 0 when a special TTI configuration is such that EPDCCH/EPHICH cannot be transmitted in a DwPTS and PDCCH/PHICH transmissions are not supported. This necessity can be avoided by not supporting such special TTI configurations when PDCCH/PHICH is also not supported.

However, if all special TTI configurations are still supported when PDCCH/PHICH is not supported, or if reduction in DL control overhead is desired, UL multi-TTI scheduling needs to extend to 3 TTIs at least for TDD UL-DL configuration 0. For TDD UL-DL configuration 6, UL multi-TTI scheduling over 2 TTIs needs to be supported. For TDD UL-DL configuration 1, the association in Table 4 between a TTI of an EPDCCH/EPHICH reception and a TTI of a PUSCH transmission is modified as in Table 9. Then, given that PDCCH/PHICH transmissions are assumed to not be supported and EPDCCH/EPHICH transmissions are not supported for some special TTI configurations, a conventional HARQ timeline between a PDCCH/EPDCCH or PHICH/EPHICH transmission from NodeB 102 and a respective PUSCH transmission from UE 116 needs to be modified. Moreover, if an EPHICH is not defined, PUSCH retransmissions for a HARQ process can only be triggered by a detection of an EPDCCH conveying an UL DCI format.

For TDD UL/DL configurations 0-6, upon detection of an EPHICH with $I_{EPHICH} = 0$ and/or an EPDCCH with UL DCI format in TTI $n$ having an UL index indicating scheduling in a first TTI (applicable for configuration 0 and 6), UE 116 accordingly adjusts a corresponding PUSCH transmission in TTI $n+k$, with $k$ given in Table 9.

For TDD UL-DL configuration 0, upon detection of an EPHICH in resource corresponding to $I_{EPHICH} = 1$ in TTI $n=0$ or 5 or of an EPDCCH with UL DCI format in TTI $n$ having an UL index indicating scheduling in a second TTI, UE 116 adjusts a respective PUSCH transmission in TTI $n+7$. Upon detection of an EPHICH in resource corresponding to $I_{EPHICH} = 2$ in TTI $n=0$ or 5 or of an EPDCCH with UL DCI format in TTI $n$ having an UL index indicating scheduling in a third TTI, UE 116 adjusts a respective PUSCH transmission in TTI $n+8$.

For TDD UL-DL configuration 6 and TTI $n=0$ or 5, upon detection of an EPHICH in resource corresponding to $I_{EPHICH} = 1$ or of an EPDCCH with UL DCI format having an UL index indicating scheduling in a second TTI, UE 116 should adjust a respective PUSCH transmission in TTI $n+8$.

Table 9: $k$ for TDD configurations 0-6

| TDD UL/DL Configuration | TTI number $n$ | | | | | | | | | |
|---|---|---|---|---|---|---|---|---|---|---|
| | 0 | 1 | 2 | 3 | 4 | 5 | 6 | 7 | 8 | 9 |
| 0 | 4 | | | | | 4 | | | | |
| 1 | 7 | | | | 4 | 7 | | | | 4 |
| 2 | | | | 4 | | | | | 4 | |
| 3 | 4 | | | | | | | | 4 | 4 |
| 4 | | | | | | | | | 4 | 4 |
| 5 | | | | | | | | | 4 | |
| 6 | 7 | | | | | 7 | | | | 5 |

For UL multi-TTI scheduling in FDD, a respective EPHICH resource can be same as for UL single-TTI scheduling as each PUSCH transmission in UL multi-TTI scheduling uses a same first RB and a same value for the CSI field. Then, a same PHICH/EPHICH resource can be used in different DL TTIs and it can be determined as in Equation (1). For TDD UL-DL configuration 0 and for a PUSCH scheduled in the third TTI, $I_{EPHICH} = 2$ is used.

Certain embodiments of the disclosure consider an association between a TTI where UE 116 transmits a PUSCH and a TTI and a resource where a NodeB can transmit a respective EPHICH.

Similar to the previous embodiments, if all special TTI configurations are supported when PDCCH is not supported or if a DL control overhead reduction is desired, UL multi-TTI scheduling or cross-TTI scheduling needs to extend to 3 TTIs at least for TDD UL-DL configuration 0. Also, for TDD UL-DL configuration 6, UL multi-TTI scheduling over 2 TTIs needs to be supported. Then, given that PDCCH/PHICH transmissions are assumed to not be supported and EPDCCH/EPHICH transmissions are not supported for some special TTI configurations, a conventional HARQ timeline between a PUSCH transmission from UE 116 and a respective EPHICH transmission from a NodeB needs to be modified.

An association between a TTI and resource of an EPHICH transmission and a TTI of a respective PUSCH transmission is as follows. For TDD UL-DL configurations 1-5, an HARQ-ACK on an EPHICH in TTI $i$ is associated with a PUSCH in TTI $i-k$ as indicated in Table 10. For TDD UL-DL configuration 0, an HARQ-ACK on an EPHICH resource corresponding to $I_{EPHICH} = 0$ in TTI $i$ is associated with a PUSCH in TTI $i-k$ as indicated in Table 10, an HARQ-ACK on an EPHICH resource corresponding to $I_{EPHICH} = 1$ in TTI $i$ is associated with a PUSCH in TTI $i-6$, and an HARQ-ACK on an EPHICH resource corresponding to $I_{EPHICH} = 2$ in TTI $i$ is associated with a PUSCH in TTI $i-8$. For TDD UL-DL configuration 6, an HARQ-ACK on an EPHICH resource corresponding to $I_{EPHICH} = 0$ in TTI $i$ is associated with a PUSCH in TTI $i$-$k$ as indicated in Table 10 and an HARQ-ACK on an EPHICH resource corresponding to $I_{EPHICH} = 1$ in TTI $i$ is associated with a PUSCH in TTI $i$-8.

Table 10: $k$ for TDD UL-DL configurations 0-6

| TDD UL-DL Configuration | TTI number $i$ | | | | | | | | | |
|---|---|---|---|---|---|---|---|---|---|---|
| | 0 | 1 | 2 | 3 | 4 | 5 | 6 | 7 | 8 | 9 |
| 0 | 7 | | | | | 7 | | | | |
| 1 | 7 | | | | | 7 | | | 7 | 7 |
| 2 | | | | 6 | | | | | 6 | |
| 3 | 6 | | | | | | | | 6 | 6 |
| 4 | | | | | | | | | 6 | 6 |
| 5 | | | | | | | | | 6 | |
| 6 | 6 | | | | | 7 | | | | 6 |

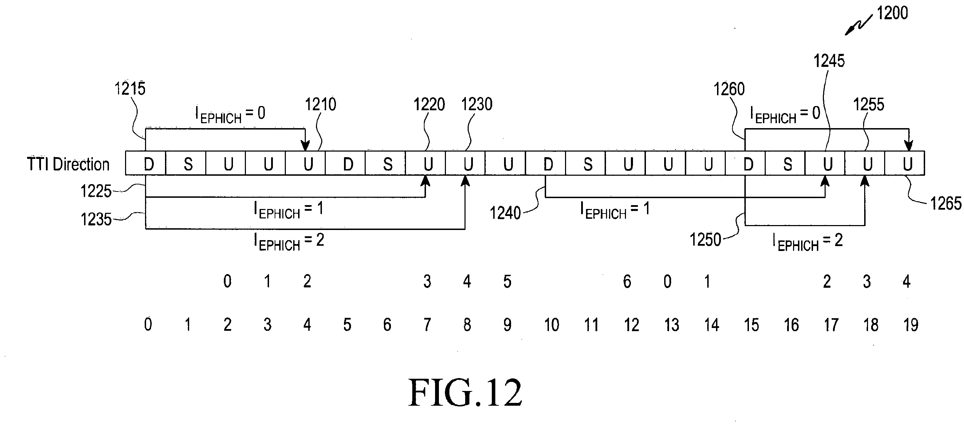

FIGURE 12 illustrates TTI associations according to embodiments of the present disclosure. The embodiment of the association 1200 shown in FIGURE 12 is for illustration only. Other embodiments could be used without departing from the scope of this disclosure. In the example shown in FIGURE 12, an association between a TTI where a UE detects an EPDCCH conveying an UL DCI format or an EPHICH and a TTI where the UE transmits a respective PUSCH and an association between a TTI where a NodeB transmits an EPHICH in response to the respective PUSCH reception for TDD UL-DL configuration 0 is illustrated.

A PUSCH transmission from UE 116 in TTI 4 1210, corresponding to UL HARQ process number 2, is triggered either by a detection of an UL DCI format with an UL index value triggering PUSCH transmission in at least a first TTI or by an EPHICH detection with $I_{EPHICH} = 0$ in TTI 0 1215. A PUSCH transmission from a UE in TTI 7 1220, corresponding to UL HARQ process number 3, is triggered either by a detection of an UL DCI format with an UL index value triggering PUSCH transmission in at least a second TTI or by a PHICH detection with $I_{EPHICH} = 1$ in TTI 0 1225. A PUSCH transmission from UE 116 in TTI 8 1230, corresponding to UL HARQ process number 4, is triggered either by a detection of an UL DCI format with an UL index value triggering PUSCH transmission in at least a third TTI or by a PHICH detection with $I_{EPHICH} = 2$ in TTI 0 1235. In response to a PUSCH transmission in TTI 4, NodeB 102 can transmit a PHICH with $I_{EPHICH} = 1$ to UE 116 in TTI 10 1240 associated with a PUSCH transmission for UL HARQ process number 2 in TTI 17 1245. In response to the PUSCH transmission in TTI 7, NodeB 102 can transmit a PHICH with $I_{EPHICH} = 2$ to the UE in TTI 15 1250 associated with a PUSCH transmission for UL HARQ process number 3 in TTI 18 1255. In response to the PUSCH transmission in TTI 8, NodeB 102 can transmit a PHICH with $I_{EPHICH} = 0$ to UE 116 in TTI 15 1260 associated with a PUSCH transmission for UL HARQ process number 4 in TTI 19 1265. Therefore, for TDD UL-DL configuration 0, DL TTI 0 and DL TTI 5 each contains PHICH groups for three UL TTIs.

In Table 10 and in FIGURE 12, a timeline between an EPHICH detection by UE 116 and a respective PUSCH transmission from the UE can be reduced from a minimum of 4 TTIs, as in a conventional operation, to less than 4 TTIs such as for example 3 TTIs as in FIGURE 10 for a PHICH transmission with $I_{EPHICH} = 2$ in TTI 15, in response to a PUSCH transmission in TTI 7, for a respective PUSCH transmission in TTI 18. If such a reduction in the minimum conventional timeline of 4 TTIs between a TTI a PUSCH transmission is triggered and a TTI a PUSCH transmission occurs is not applicable, a number of HARQ processes, as a maximum number of TTIs for multi-TTI scheduling increases, needs to increase relative to a conventional number of HARQ processes.

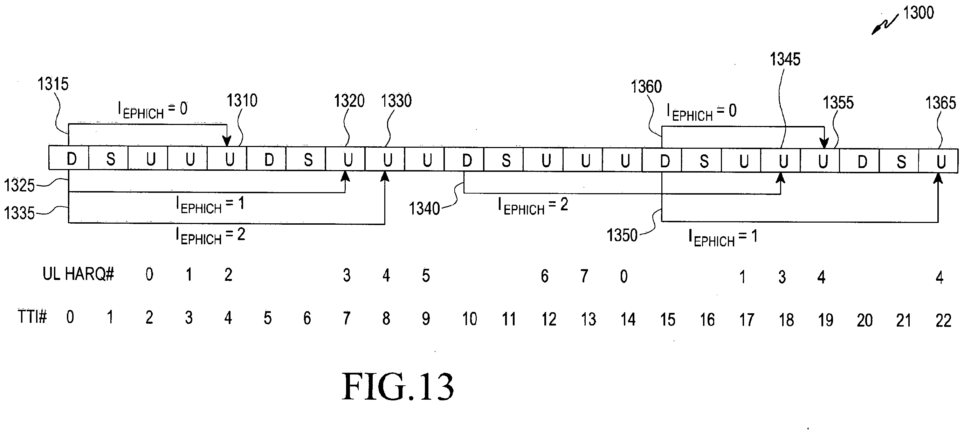

FIGURE 13 illustrates TTI associations according to embodiments of the present disclosure. The embodiment of the association 1300 shown in FIGURE 13 is for illustration only. Other embodiments could be used without departing from the scope of this disclosure. In the example shown in FIGURE 13 an association between a TTI where a UE detects an EPDCCH conveying an UL DCI format or an EPHICH and a TTI where the UE transmits a respective PUSCH and an association between a TTI where a NodeB transmits an EPHICH in response to the respective PUSCH reception for TDD UL-DL configuration 0 and for 8 UL HARQ processes is illustrated.

A PUSCH transmission from UE 116 in TTI 4 1310, corresponding to UL HARQ process number 2, is triggered either by a detection of an UL DCI format with an UL index value triggering PUSCH transmission in at least a first TTI or by an EPHICH detection with $I_{EPHICH} = 0$ in TTI 0 1315. A PUSCH transmission from UE 116 in TTI 7 1320, corresponding to UL HARQ process number 3, is triggered either by a detection of an UL DCI format with an UL index value triggering PUSCH transmission in at least a second TTI or by a PHICH detection with $I_{EPHICH} = 1$ in TTI 0 1325. A PUSCH transmission from UE 116 in TTI 8 1330, corresponding to UL HARQ process number 4, is triggered either by a detection of an UL DCI format with an UL index value triggering PUSCH transmission in at least a third TTI or by a PHICH detection with $I_{EPHICH}$ = 2 in TTI 0 1335. In response to the PUSCH transmission in TTI 4, NodeB 102 transmits a PHICH with $I_{EPHICH}$ = 2 to UE 116 in TTI 10 1340 associated with a PUSCH transmission for UL HARQ process number 2 in TTI 18 1345. In response to the PUSCH transmission in TTI 7, NodeB 102 transmits a PHICH with $I_{EPHICH}$ = 0 to UE 116 in TTI 15 1350 associated with a PUSCH transmission for UL HARQ process number 3 in TTI 19 1355. In response to the PUSCH transmission in TTI 8, NodeB 102 transmits a PHICH with $I_{EPHICH}$ = 1 to UE 116 in TTI 15 1360 associated with a PUSCH transmission for UL HARQ process number 4 in TTI 22 1365. Therefore, by increasing the number of HARQ processes relative to the conventional operation for TDD UL-DL configuration 0, the timeline of at least 4 TTIs between the TTI a PUSCH transmission is triggered, either by a DL DCI format or by a PHICH, and the TTI where the PUSCH transmission occurs is maintained.

Therefore, assuming 8 UL HARQ processes for TDD UL-DL configuration 0, an HARQ-ACK on an EPHICH resource corresponding to $I_{EPHICH}$ = 0 in TTI $i$ is associated with a PUSCH in TTI $i$-8, an HARQ-ACK on an EPHICH resource corresponding to $I_{EPHICH}$ = 1 in TTI $i$ is associated with a PUSCH in TTI $i$-7, and an HARQ-ACK on an EPHICH resource corresponding to $I_{EPHICH}$ = 2 in TTI $i$ is associated with a PUSCH in TTI $i$-6.

Certain embodiments of the disclosure consider a determination of PUCCH resources used for HARQ-ACK signal transmissions from UE 116 in response to DL multi-TTI scheduling.

For a FDD system, a conventional timeline for a TTI where UE 116 transmits a HARQ-ACK signal is defined relative to a TTI of a respective PDCCH/EPDCCH detection. For example, in FDD UE 116 transmits a HARQ-ACK signal 4 TTIs after a TTI of a respective PDCCH/EPDCCH detection while in TDD UE 116 transmits an HARQ-ACK signal in an UL TTI corresponding to a bundling window (this UL TTI occurs at least 4 TTIs after a last DL TTI in the bundling window). However, in case of DL multi-TTI scheduling, a single PDCCH schedules multiple PDSCHs in respective multiple TTIs or schedules a PDSCH at a later TTI than the TTI of the PDCCH transmission (cross-TTI scheduling) and a conventional HARQ timeline cannot apply.

Certain embodiments of the disclosure consider that a timeline for UE 116 to transmit a HARQ-ACK signal is defined relative to a TTI of a respective PDSCH reception, and not relative to a TTI of a respective PDCCH/EPDCCH detection, and it can be same as a conventional timeline.

For HARQ-ACK signal transmissions from UE 116 in response to DL multi-TTI scheduling or DL cross-TTI scheduling, one consideration is a determination of respective PUCCH resources. Two approaches are considered with reference to a FDD system.

The PUCCH resource for HARQ-ACK signal transmission in response to a respective PDSCH reception in a same TTI as a respective PDCCH/EPDCCH detection (first TTI of a DL multi-TTI scheduling window) is as for the conventional single-TTI scheduling operation as given by Equation 2 unless explicitly mentioned otherwise (as in the second approach below).

In a first approach, a PUCCH resource is determined as in Equation 2 even though for PDSCH receptions in any TTI other than the TTI of the PDCCH/EPDCCH triggering DL multi-TTI scheduling or DL cross-TTI scheduling there is no associated PDCCH. The lowest CCE index, $n_{CCE}$, of the PDCCH triggering DL multi-TTI scheduling for a reference UE is still used in determining a respective PUCCH resource for HARQ-ACK signal transmission even though, with respect to the HARQ timeline, the PUCCH resource for HARQ-ACK signal transmission is not associated with the TTI of the PDCCH triggering DL multi-TTI scheduling. This can lead to a same PUCCH resource being used for HARQ-ACK signal transmission from a second UE, for example with PUCCH resource for HARQ-ACK signal transmission associated with the TTI of the HARQ-ACK signal transmission with respect to the HARQ timeline if $n_{CCE}$ is also the lowest CCE index of a respective PDCCH/EPDCCH scheduling a PDSCH to the second UE. However, a NodeB scheduler can avoid such PUCCH resource collisions either by using a CCE with index $n_{CCE}$ for a PDCCH/EPDCCH scheduling PDSCH or by not using it as the first CCE of a PDCCH/EPDCCH, or by relying on using different values for the $f_{FDD}$(other) function.

In a second approach, a same PUCCH resource can be configured by higher layer signaling for each HARQ-ACK signal transmission in response to each respective PDSCH reception associated with DL multi-TTI scheduling. Alternatively, multiple PUCCH resources can be configured by higher layer signaling and a selected same PUCCH resource for all HARQ-ACK signal transmissions associated with a same DL multi-TTI scheduling to UE 116 can be indicated by a value of a HRO field included in a DCI format conveyed by a PDCCH triggering the DL multi-TTI scheduling.

Therefore, for a HARQ-ACK signal transmission in response to multi-TTI scheduling or cross-TTI scheduling, a PUCCH resource corresponding to the TTI of the respective PDCCH transmission (first TTI) can be determined either implicitly, from a CCE with index $n_{CCE}$ for a PDCCH/EPDCCH scheduling a respective PDSCH as it was previously described, or can be determined from a resource configured by higher layer signaling. A PUCCH resource corresponding to any TTI other than the first TTI of the multiple TTIs can be determined to either be same as the one for the first TTI or from a resource configured by higher layer signaling.

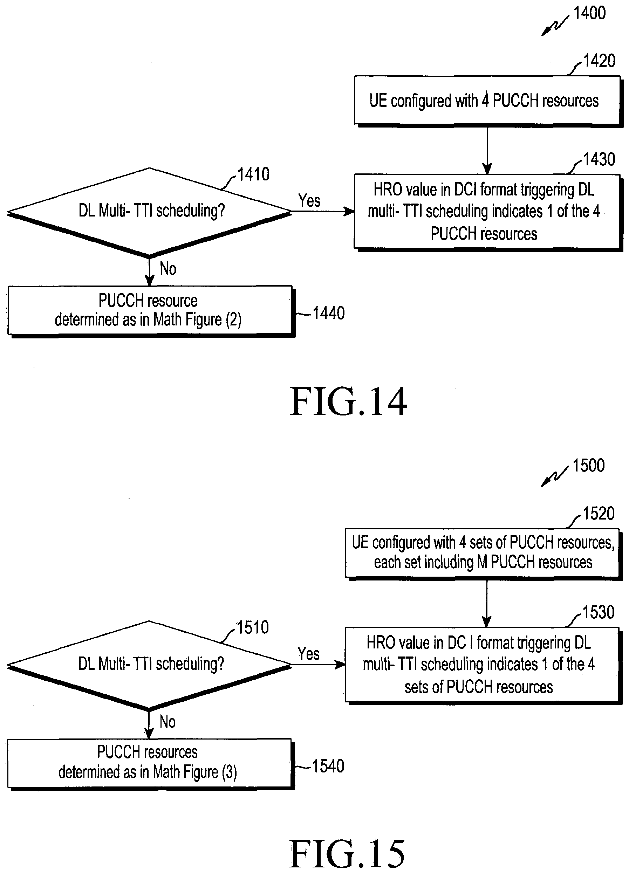

FIGURE 14 illustrates a process 1400 for using a HRO field for indicating a higher layer resource from a set of higher layer configured resources for HARQ-ACK transmissions associated with DL multi-TTI scheduling in FDD according to the embodiments of the present disclosure. While the flow chart depicts a series of sequential steps, unless explicitly stated, no inference should be drawn from that sequence regarding specific order of performance, performance of steps or portions thereof serially rather than concurrently or in an overlapping manner, or performance of the steps depicted exclusively without the occurrence of intervening or intermediate steps. The process depicted in the example depicted is implemented by a transmitter chain in, for example, a mobile station.

Referring to FIGURE 14, UE 116, which is configured for DL multi-TTI scheduling, first considers whether a DL DCI format in a respective EPDCCH detection is associated with DL multi-TTI scheduling 1410. UE 116 is also configured by higher layer signaling four PUCCH resources for HARQ-ACK signal transmission 1420. If the DL DCI format triggers DL multi-TTI scheduling, UE 116 selects one from the four configured PUCCH resources based on an indication from the HRO field consisting of two bits in the DL DCI format, and uses the selected PUCCH resource for each HARQ-ACK signal transmission associated with the DL multi-TTI scheduling 1430. If the DCI format does not trigger DL multi-TTI scheduling, UE 116 determines a PUCCH resource for HARQ-ACK signal transmission as in Equation 2 1440.

Although in FIGURE 14 the PUCCH resource for HARQ-ACK signal transmission in case of DL single-TTI scheduling is dynamically determined through the use of the lowest CCE index, $n_{CCE}$, of a respective EPDCCH, a same approach as for DL multi-TTI scheduling based on an indication by the HRO field of a higher layer configured resource can also be applied. Therefore, it is also possible, as an alternative, to determine a PUCCH resource based on a HRO indication of resource configured by higher layer signaling regardless of whether the DL scheduling is single-TTI or multi-TTI.

One difference for DL multi-TTI scheduling in TDD relative to FDD is that HARQ-ACK signal transmissions in response to respective PDSCH receptions in a DL multi-TTI window can be in a same UL TTI if they are in a same bundling window or in different UL TTIs if they are in different bundling windows.

Assuming that a DL multi-TTI scheduling window is restricted to be a subset of a bundling window for a respective

$$\sum_{i=0}^{m-1} N_{CCE,i}$$

TDD UL-DL configuration, the term ensures orthogonal PUCCH resources for HARQ-ACK signal transmissions in response to PDSCH receptions in different TTIs, thereby establishing a same operation as for FDD where such resources are in different TTIs and therefore orthogonal in the time domain. This means that in case of DL multi-

$$\sum_{i=0}^{m-1} N_{CCE,i}$$

TTI scheduling or DL cross-TTI scheduling, the term is computed with respect to a TTI of PDSCH reception and not with respect to a TTI of PDCCH/EPDCCH detection as in case of DL single-TTI scheduling. Then, the same two approaches as for FDD can also fundamentally apply for TDD.

For the second approach, where PUCCH resources are configured to UE 116 by higher layer signaling, one difference between FDD and TDD is that for TDD a different PUCCH resource should be configured for each TTI in a bundling window since respective HARQ-ACK signal transmissions are in a same TTI. Therefore, while in FDD a same PUCCH resource can be used by UE 116 for each HARQ-ACK signal transmission associated with DL multi-TTI scheduling, in TDD a set of PUCCH resources with size equal to a bundling window size $M$ need to be configured to UE 116.

Alternatively, similar to FDD, multiple sets of PUCCH resources, with each set including $M$ PUCCH resources, can be configured to UE 116 by higher layer signaling and a selected same PUCCH resource set for HARQ-ACK signal transmissions can be indicated by a HRO field value in the DL DCI format conveyed by the PDCCH/EPDCCH triggering DL multi-TTI scheduling.

FIGURE 15 illustrates a process 1500 for using an HRO field for indicating a higher layer resource from a set of higher layer configured resources for HARQ-ACK transmissions associated with DL multi-TTI scheduling in TDD according to embodiments of the present disclosure. While the flow chart depicts a series of sequential steps, unless explicitly stated, no inference should be drawn from that sequence regarding specific order of performance, performance of steps or portions thereof serially rather than concurrently or in an overlapping manner, or performance of the steps depicted exclusively without the occurrence of intervening or intermediate steps. The process depicted in the example depicted is implemented by a transmitter chain in, for example, a mobile station.

UE 116, which is configured for DL multi-TTI scheduling, first considers whether a DCI format it receives through a respective EPDCCH detection is for DL multi-TTI scheduling 1510. UE 116 is also configured by higher layer signaling four sets of PUCCH resources for HARQ-ACK signal transmission 1520 wherein each set consists of a number of PUCCH resources equal to a bundling window size $M$ for a respective TDD UL-DL configuration. If the DCI format triggers DL multi-TTI scheduling, UE 116 selects one from the four configured sets of PUCCH resources, based on an indication of a HRO field consisting of two bits in the DL DCI format, and uses the selected set of PUCCH resources for HARQ-ACK signal transmissions associated with the DL multi-TTI scheduling triggered by the DCI format 1530. If the DCI format does not trigger DL multi-TTI scheduling, the UE determines a set of PUCCH resources for HARQ-ACK signal transmission as in Equation 3 1540.

Certain embodiments of the disclosure consider a release of multi-TTI scheduling after a transmission of a respective DCI format activating multi-TTI scheduling. For brevity, the description is with respect to the DL of a communication system but it also applies for the UL.

UE 116 is assumed to monitor two DL DCI formats in a TTI. A first DL DCI format, such as DCI format 2D, corresponds to a configured PDSCH transmission mode and a second DL DCI format, such as DCI format 1A, serves to provide robust fallback for PDSCH transmissions, for example when NodeB 102 determines that the channel conditions UE 116 experiences have changed significantly enough for PDSCH transmissions using the configured transmission mode to not be sufficiently reliable.

As the second DL DCI format serves to maintain the communication link, provide reconfigurations of PDSCH or PUSCH transmission parameters, and it is not often used to schedule PDSCH transmissions (the first DL DCI format is used to schedule PDSCH transmissions in order to increase spectral efficiency), it is preferable to maintain the robust operation of the second DCI format and, if applicable, avoid increasing its size in order to avoid degrading its detection reliability. Therefore, the second DL DCI format may not include a DL index field for DL multi-TTI scheduling. Additionally, in TDD systems, the conventional use of the DL DAI field in the second DL DCI format may be maintained when UE 116 is configured for DL multi-TTI scheduling while the DAI field in the first DL DCI format serves entirely, or as part of, a DL index field.

A release of multi-TTI scheduling can be implicitly performed when UE 116 detects the second DCI format within a respective multi-TTI scheduling window. Upon detection of the second DCI format, UE 116 can suspend reception of PDSCH associated with DL multi-TTI scheduling or suspend transmission of PUSCH associated with UL multi-TTI scheduling, starting from the TTI of the second DCI format detection.

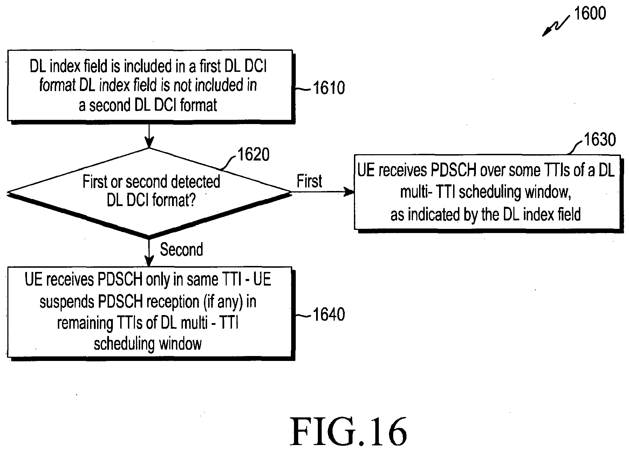

FIGURE 16 illustrates a process 1600 for activation or non-activation of DL multi-TTI scheduling according to embodiments of the present disclosure. While the flow chart depicts a series of sequential steps, unless explicitly stated, no inference should be drawn from that sequence regarding specific order of performance, performance of steps or portions thereof serially rather than concurrently or in an overlapping manner, or performance of the steps depicted exclusively without the occurrence of intervening or intermediate steps. The process depicted in the example depicted is implemented by a transmitter chain in, for example, a mobile station.

For UE 116 configured with DL multi-TTI scheduling, a DL index field is included in a first DL DCI format and is not included in a second DL DCI format 1610. Upon detection of a DL DCI format 1620, if the DL DCI format is the first one UE 116 receives PDSCH over some TTIs of a DL multi-TTI scheduling window, as indicated by the DL index field 1630. If the DL DCI format is the second one, UE 116 receives PDSCH only in the TTI of the PDCCH transmission conveying the second DL DCI format, and with reception parameters indicated by the second DL DCI format, and suspends PDSCH reception (if any) in the remaining TTIs of the DL multi-TTI scheduling window 1640.

A release of DL multi-TTI scheduling may be further conditioned on the location of the CCEs of the PDCCH conveying the second DCI format (DCI format 1A). If this location is in a UE-Common Search Space (CSS), UE 116 considers DCI format 1A as always releasing DL multi-TTI scheduling and DCI format 1A transmitted with CCEs in the CSS may not include a DL index field. If this location is in a UE-Dedicated Search Space (UE-DSS), DCI format 1A also can be used to perform DL multi-TTI scheduling and can then include a DL index field. Similar to DCI format 1A, a detection of DCI format 0 in the CSS can be used for implicitly releasing UL multi-TTI scheduling.

The previously described operation for multi-TTI scheduling can also be combined with a reduction in the number of PDCCH/EPDCCH decoding operations UE 116 performs over a DL multi-TTI window or over an UL multi-TTI window. Upon detection of a DL DCI format associated with a configured PDSCH transmission mode (for example, DCI format 2D) indicating PDSCH reception over a number of TTIs larger than one, UE 116 may not decode PDCCH/EPDCCH for this DL DCI format for the remaining of the TTIs.

Similar, upon detection of an UL DCI format associated with a configured PUSCH transmission mode, referred to as DCI format 4, indicating PUSCH transmission over a number of TTIs larger than one, UE 116 may not decode PDCCH/EPDCCH for this UL DCI format for the remaining of the TTIs associated with the remaining TTIs of PUSCH transmission. In case of a single PUSCH transmission mode associated with DCI format 0, UE 116 may not decode PDCCH/EPDCCH in the UE-DSS for this UL DCI format for the remaining of the TTIs associated with the remaining TTIs of PUSCH transmission.

A release of multi-TTI scheduling is primarily applicable when the multi-TTI scheduling window is relatively large; otherwise, a process for releasing multi-TTI scheduling may not be supported and all DCI formats UE 116 is configured to monitor in a DL TTI can be used for multi-TTI scheduling.

Certain embodiments of the disclosure consider a structure of a DL TTI supporting MBMS traffic in a non-conventional carrier type without CRS or conventional DCI transmissions.

A presence of DCI in conventional DL TTIs configured for MBMS traffic is primarily for supporting PUSCH scheduling. However, if UL multi-TTI scheduling is supported over a number of TTIs equal to a maximum number of consecutive DL TTIs configured for MBMS traffic, a need for including unicast symbols in such DL TTIs no longer exists and all symbols can be multicast ones.

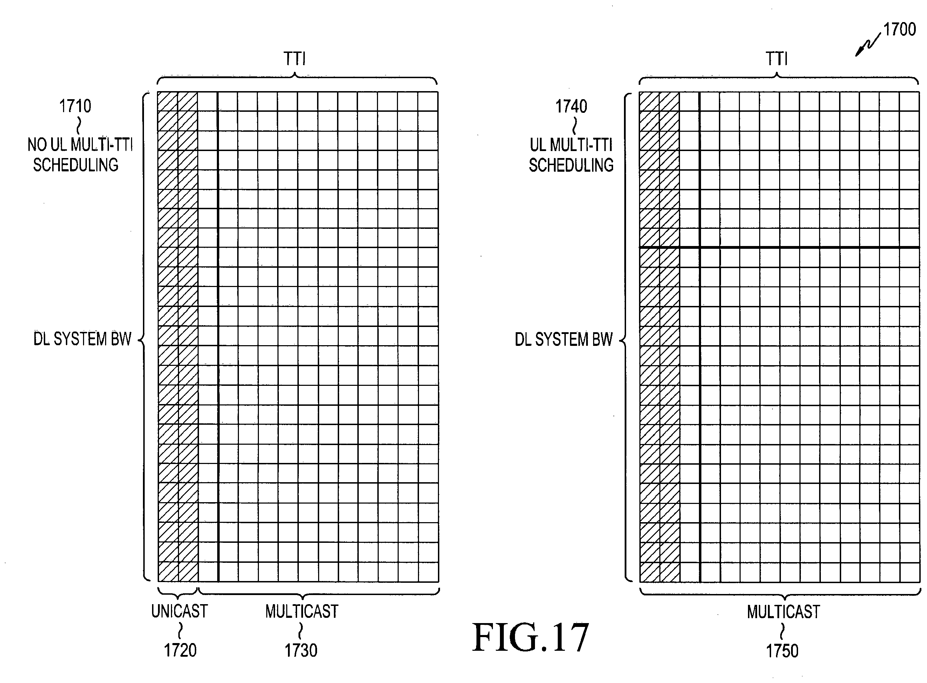

FIGURE 17 illustrates a structure of a DL TTI configured for MBMS traffic depending on whether UL multi-TTI scheduling is supported according to embodiments of the present disclosure. The embodiment of the structure of a DL TTI 1700 shown in FIGURE 17 is for illustration only. Other embodiments could be used without departing from the scope of this disclosure.

If UL multi-TTI scheduling is not supported 1710, a DL TTI configured for MBMS traffic consists of a first number of unicast symbols 1720 and a second number of multicast symbols 1730. If UL multi-TTI scheduling is supported 1740, a DL TTI configured for MBMS traffic consists only of multicast symbols 1750.

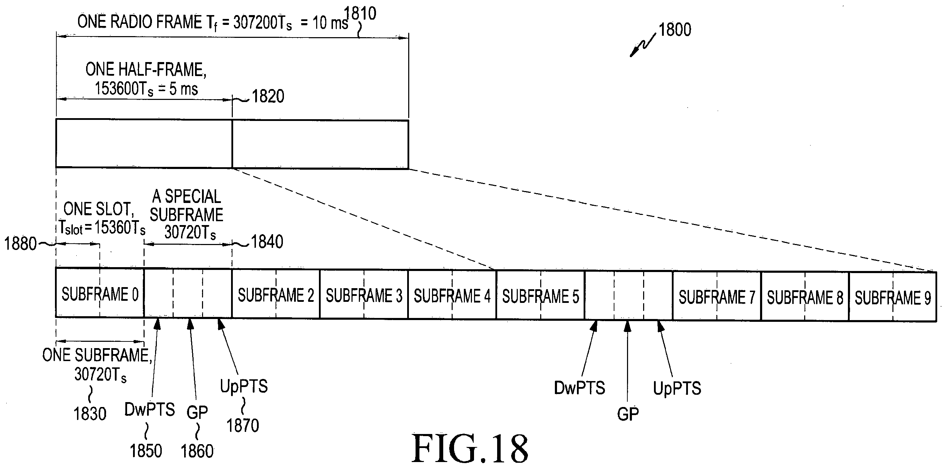

FIGURE 18 illustrates a frame structure according to embodiments of the present disclosure. The Frame structure 1800 shown in FIGURE 18 is for illustration only. Other embodiments could be used without departing from the scope of the present disclosure.

In the example, shown in FIGURE 18, the frame structure 1800 is a frame structure type 2 of 3GPP LTE systems, applicable to TDD whose subframe partition. Each radio frame 1810 of length $T_f = 307200 \cdot T_s = 10$ ms consists of two half-frames 1821 and 1822 of length $153600 \cdot T_s = 5$ ms each. Each half-frame 1820 consists of five subframes 1830 of length $30720 \cdot T_s = 1$ ms. The supported uplink-downlink configurations are listed in Table 11 where, for each subframe 1830 in a radio frame 1810, "D" denotes the subframe is reserved for downlink transmissions, "U" denotes the subframe is reserved for uplink transmissions and "S" denotes a special subframe 1840 with the three fields DwPTS 1850, GP 1860 and UpPTS 1870. The length of DwPTS 1850 and UpPTS 1870 is given by Table 12 subject to the total length of DwPTS 1850, GP 1860 and UpPTS 1870 being equal to $30720 \cdot T_s = 1$ ms. Each subframe 1830 $i$ is defined as two slots 1880, $2i$ and $2i+1$ of length $T_{slot} = 15360 \cdot T_s = 0.5$ ms in each subframe 1830. Uplink-downlink configurations with both 5 ms and 10 ms downlink-to-uplink switch-point periodicity are supported. In case of 5 ms downlink-to-uplink switch-point periodicity, the special subframe 1840 exists in both half-frames 1821 and 1822. In case of 10 ms downlink-to-uplink switch-point periodicity, the special subframe 1840 exists in the first half-frame 1820 only. Subframes 0 and 5, 1831 and 1832, and DwPTS 1850 are always reserved for downlink transmission. UpPTS 1870 and the subframe immediately following the special subframe 1840 are always reserved for uplink transmission. In case multiple cells are aggregated, UE 116 can assume the same uplink-downlink configuration across all the cells and that the guard period of the special subframe 1840 in the different cells have an overlap of at least $1456 \cdot T_s$. For frame structure type 2, the GP field 1860 serves as a guard period.

Table 11: Uplink-downlink configurations.

| Uplink-downlink configuration | Downlink-to-Uplink Switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

Table 12: Configuration of special subframe (lengths of DwPTS/GP/UpPTS).

| Special subframe configuration | Normal cyclic prefix in downlink | | | Extended cyclic prefix in downlink | | |
|---|---|---|---|---|---|---|
| | DwPTS | UpPTS | | DwPTS | UpPTS | |
| | | Normal cyclic prefix in uplink | Extended cyclic prefix in uplink | | Normal cyclic prefix in uplink | Extended cyclic prefix in uplink |
| 0 | $6592 \cdot T_s$ | $2192 \cdot T_s$ | $2560 \cdot T_s$ | $7680 \cdot T_s$ | $2192 \cdot T_s$ | $2560 \cdot T_s$ |
| 1 | $19760 \cdot T_s$ | | | $20480 \cdot T_s$ | | |
| 2 | $21952 \cdot T_s$ | | | $23040 \cdot T_s$ | | |
| 3 | $24144 \cdot T_s$ | | | $25600 \cdot T_s$ | | |
| 4 | $26336 \cdot T_s$ | | | $7680 \cdot T_s$ | | |
| 5 | $6592 \cdot T_s$ | $4384 \cdot T_s$ | $5120 \cdot T_s$ | $20480 \cdot T_s$ | $4384 \cdot T_s$ | $5120 \cdot T_s$ |
| 6 | $19760 \cdot T_s$ | | | $23040 \cdot T_s$ | | |
| 7 | $21952 \cdot T_s$ | | | $12800 \cdot T_s$ | | |
| 8 | $24144 \cdot T_s$ | | | - | - | - |
| 9 | $13168 \cdot T_s$ | | | - | - | - |

For the special subframe configurations 0 and 5 with normal downlink CP or configurations 0 and 4 with extended downlink CP, no PDSCH transmission occurs in DwPTS 1850 of the special subframe1840.

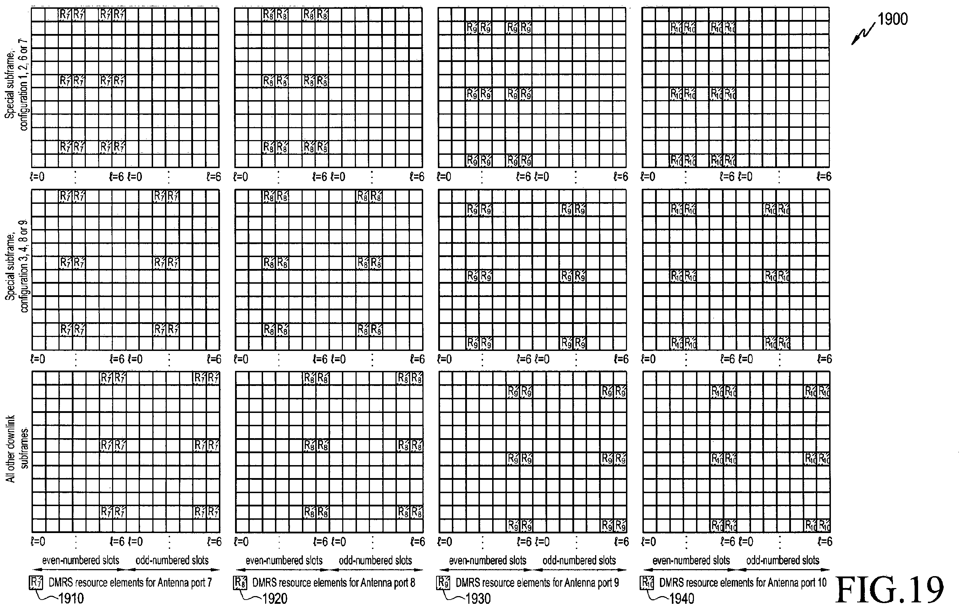

FIGURE 19 illustrates the resource elements used for UE-specific reference signals for normal cyclic prefix for antenna ports 7, 8, 9 and 10, 1910, 1920, 1930 and 1940 according to embodiments of the present disclosure. The embodiment of the resource element mapping 1900 shown in FIGURE 19 is for illustration only. Other embodiments could be used without departing from the scope of the present disclosure.

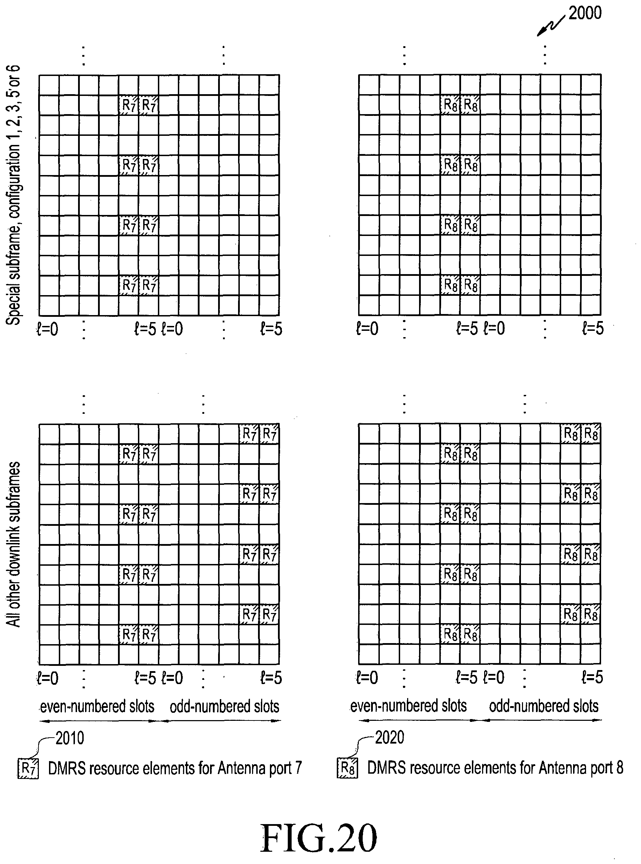

FIGURE 20 illustrates the resource elements used for UE-specific reference signals for extended cyclic prefix for antenna ports 7, 8, 2010, 2020 according to embodiments of the present disclosure. The embodiment of the resource element mapping 2000 shown in FIGURE 20 is for illustration only. Other embodiments could be used without departing from the scope of the present disclosure

Demodulation reference signals (DMRS) for the ePDCCH are defined for antenna ports (APs) 107-110.

The DMRS patterns for APs 107-110 in for normal cyclic prefix are identical to APs 7-10, 1910, 1920, 1930 and 1940, shown in FIGURE 19.

The DMRS patterns for APs 107-108 in for extended cyclic prefix are identical to APs 7-8, 2010 and 2020, shown in FIGURE 20.

Enhanced resource-element groups (EREGs) are used for defining the mapping of enhanced control channels to resource elements.

There are 16 EREGs, numbered from 0 to 15, per physical resource block pair. Number all resource elements, except resource elements carrying DM-RS for antenna ports, 1910, 1920, 1930 and 1940, $p = \{107,108,109,110\}$ for normal cyclic prefix or $p = \{107,108\}$, 2010 and 2020, for extended cyclic prefix, in a physical resource-block pair cyclically from 0 to 15 in an increasing order of first frequency, then time. All resource elements with number $i$ in that physical resource-block pair constitutes EREG number $i$.

Within EPDCCH set $S_m$ in subframe $i$, the enhanced control channel elements (ECCEs) available for transmission of EPDCCHs are numbered from 0 to $N_{\text{ECCE},m,i}-1$ and ECCE number $n$ corresponds to

EREGs numbered $\left(n \bmod N_{\text{RB}}^{\text{ECCE}}\right) + j N_{\text{RB}}^{\text{ECCE}}$ in PRB index $\left\lfloor n/N_{\text{RB}}^{\text{ECCE}} \right\rfloor$ for localized mapping, and

EREGs numbered $\left\lfloor n/N_{\text{RB}}^{S_m} \right\rfloor + j N_{\text{RB}}^{\text{ECCE}}$ in PRB indices $\left(n + j \max\left(1, N_{\text{RB}}^{S_m}/N_{\text{ECCE}}^{\text{EREG}}\right)\right) \bmod N_{\text{RB}}^{S_m}$ for distributed mapping,

where $j = 0,1,...,N_{\text{ECCE}}^{\text{EREG}} -1$, $N_{\text{ECCE}}^{\text{EREG}}$ is the number of EREGs per ECCE as defined in Table 13, and

$N_{\text{RB}}^{\text{ECCE}} = 16/N_{\text{ECCE}}^{\text{EREG}}$ is the number of ECCEs per resource-block pair. The physical resource-block pairs constituting

EPDCCH set $S_m$ are in this paragraph assumed to be numbered in ascending order from 0 to $N_{\text{RB}}^{S_m} -1$.

Table 13: Number of EREGs per ECCE, $N_{ECCE}^{EREG}$.

| Normal cyclic prefix | | | Extended cyclic prefix | |
|---|---|---|---|---|
| Normal subframe | Special subframe, configuration 3, 4, 8 | Special subframe, configuration 1, 2, 6, 7, 9 | Normal subframe | Special subframe, configuration 1, 2, 3, 5, 6 |
| 4 | | | 8 | |

For a given serving cell, for each EPDCCH-PRB-pair set $p$, the UE is configured with a higher layer parameter resourceBlockAssignment-r11 indicating a combinatorial index $r$ corresponding to the PRB index $\{k_i\}_{i=0}^{N_{RB}^{X_p}}$, ( $1 \leq k_i \leq N_{RB}^{DL}$,

$$r = \sum_{i=0}^{N_{RB}^{X_p}-1} \left\langle \begin{matrix} N_{RB}^{DL} - k_i \\ N_{RB}^{X_p} - i \end{matrix} \right\rangle$$

$k_i < k_{i+1}$) and given by equation as defined in section 7.2.1 of 36.213, where $N_{RB}^{DL}$ is the number of PRB pairs associated with the downlink bandwidth, $N_{RB}^{X_p}$ (defined in section 6.8A.1 in [3]) is the number of PRB-pairs constituting EPDCCH-PRB-set $p$, and is configured by the higher layer parameter numberPRBPairs-r11, and

$$\left\langle \begin{matrix} x \\ y \end{matrix} \right\rangle = \begin{cases} \begin{pmatrix} x \\ y \end{pmatrix} & x \geq y \\ 0 & x < y \end{cases}$$

is the extended binomial coefficient, resulting in unique label $r \in \left\{ 0,..., \begin{pmatrix} N_{RB}^{DL} \\ N_{RB}^{X_p} \end{pmatrix} - 1 \right\}$.

EPDCCH-Config the IE EPDCCH-Config is used to configure the subframes and resource blocks for EPDCCH monitoring.

```
-- ASNISTART
EPDCCH-Config-r11 ::= SEQUENCE{
epdcch-SubframePatternConfig-r11CHOICE {
   release NULL,
   setup SEQUENCE {
      epdcch-SubframePattem-r11 MeasSubframePattern-r10
}
   } OPTIONAL, --
   Need ON
   epdcch-StartSymbot-r11 INTEGER (1..4)
   OPTIONAL, -- Need OP
   epdcch-SetConfigReleaseList-r11 EPDCCH-SetConfigReleaseList-r11
   OPTIONAL, -- Need ON
   epdcch-SetConfigAddModList-r11 EPDCCH-SetConfigAddModList-r11
   OPTIONAL -- Need ON
   EPDCCH-SetConfigAddModList-r11 ::= SEQUENCE (SIZE(1..2)) OF
   EPDCCH-SetConfig-r11
   EPDCCH-SetConfigReleaseList-r11 ::= SEQUENCE (SIZE(1..2)) OF
   EPDCCH-SetIdentity-r11
   EPDCCH-SetConfig-r11 ::= SEQUENCE {
   epdcch-SetIdentity-r11 EPDCCH-SetIdentity-r11,
   epdcch-TransmissionType-r11 ENUMERATED {localised, distributed},
   epdcch-ResourceBlockAssignment-r11 SEQUENCE{
numberPRBPairs-r11 ENUMERATED {n2, n4, n8},
resourceBlockAssignment-r11 BIT STRING (SIZE(4..38))
},
dmrs-ScramblingSequenceInt-r11 INTEGER (0..503),
pucch-ResourceStartOffset-r11 INTEGER (0..2047),
re-MappingQCLConfigListId-r11 PDSCH-RE-MappingQCL-ConfigId-r11
OPTIONAL -- Need OR
}
```

```
EPDCCH-SetIdentity-r11 ::= INTEGER (0..1)
-- ASN1STOP
```

| EPDCCH-Config field descriptions |
|---|
| **dmrs-ScramblingSequenceInt** <br> The DMRS scrambling sequence initialization parameter $n_{\text{ID},i}^{\text{EPDCCH}}$ defined in TS 36.211[21, 6.10.3A.1]. |
| **epdcch-SetConfig** <br> Provides EPDCCH configuration set. See TS 36.213 [23, 9.1.4]. E-UTRAN configures at least one epdcch-SetConfig when EPDCCH-Config is configured. |
| **epdcch-SetIdentity** <br> Indicates the indentity of the EPDCCH set. |
| **epdcch-StartSymbol** <br> Indicates the OFDM starting symbol for any EPDCCH and PDSCH scheduled by EPDCCH on the same cell, if the UE is not configured with tm10. See TS 36.213 [23, 9.1.4.1]. If not present, the configuration is released and the UE shall derive the starting OFDM symbol of EPDCCH and PDSCH scheduled by EPDCCH from PCFICH. Values 1, 2, and 3 are only applicable for dl-Bandwidth greater than 10 resource blocks. Values 2, 3, and 4 are applicable otherwise. It is not configured for UEs configured with tm10. |
| **epdcch-SubframePatternConfig** <br> Configures the subframes which the UE shall monitor the UE-specific search space on EPDCCH. See TS 36.213 [23, 9.1.4]. If it is not configured when EPDCCH is configured, the UE monitors the UE-specific search space on EPDCCH in all subframes except for pre-defined rules in TS 36.213 [23, 9.1.4]. |
| **epdcch-TransmissionType** <br> Indicates whether distributed or localized EPDCCH transmission mode is used as defined in TS 36.211 [21, 6.8A.1]. |
| **numberPRBPairs** <br> Indicates the number of physical resource-block pairs used for the EPDCCH set. Value n2 corresponds to 2 physical resource-block pairs; n4 corresponds to 4 physical resource-block pairs and so on. n8 is not supported for dl-Bandwidth having value n6. |
| **pucch-ResourceStartOffset** <br> PUCCH format 1a and 1b resource starting offset for the EPDCCH set. See TS 36.213 [23, 10.1, FFS). |
| **re-MappingQCLConfigListId** <br> Indicates the starting OFDM symbol, the related rate matching parameters and quasi-collocation assumption for EPDCCH when the UE is configured in tm10. This provides the index of PDSCH-RE-MappingQCL-ConfigId. E-UTRAN configures this only when tm10 is configured. |
| **resourceBlockAssignment** <br> Indicates the index to a specific combination of physical resource-block pair for EPDCCH set. See TS 36.211 [21, 6.8A.1]. The size of resourceBlockAssignment is derived using table [FFS] of TS 36.211 [21, FFS] and based on numberPRBPairs and the signalled value of dl-Bandwidth. |

The number of OFDM symbols in DwPTS 1850 is determined by the configuration shown in Table 12, and the smallest number of OFDM symbols in DwPTS 1850 is 3.

The small number of available OFDM symbols in DwPTS 1850 poises challenges to transmit downlink physical signals. For example, Rel-10 LTE does not define UE-RS mapping (FIGURE 19 and FIGURE 20) for special subframe configuration 0 and 5 (normal CP) where the number of OFDM symbols in the DwPTS 1850 is 3. Effectively, Rel-10 LTE does not support PDSCH transmissions with UE-RS ports 7-14 in the DwPTS 1850 when the special subframe configuration is 0 or 5.

The two new features based on UE-RS ports 7-14 introduced in Rel-11 may have some issues in DwPTS 1850: enhanced physical downlink control channels (ePDCCH) and the new carrier type (NCT).

In DwPTS in subframe configurations 0 or 5, neither DMRS ports 107-110 nor UE-RS ports 7-14 have been defined in Rel-10 LTE. Hence, it is not possible to transmit ePDCCH and PDSCH in these subframes.

Similar issues arise when considering transmission of MBMSN subframes in NCT, where only 2 OFDM symbols can be used for transmitting PHY control signals.

When number OFDM symbols in the DwPTS 1850 in the NCT is 3 (the special subframe configurations 0 and 5 with normal downlink CP or configurations 0 and 4 with extended downlink CP), it is not clear how to use the 3 OFDM symbols in the DwPTS 1850, because no UE-RS/DMRS patterns are defined and no CRS is transmitted in the DwPTS 1850. Similar issues arise when MBSFN subframes are configured in the NCT, number of OFDM symbols that can be used for carrying PHY control signaling is only 2.

In order to resolve the issues occurring from having a possibility of configuring 3-OFDM-symbol DwPTS (or MBSFN in the NCT cells), it is proposed to define a new DMRS mapping in the first 3 OFDM symbols in the DwPTS and to support transmission of DMRS in the DwPTS 1850.

In one alternative, only the DMRS ports 107 and 108 are defined and used in the DwPTS 1850. In another alterative, DMRS ports 107-110 are defined and used in the DwPTS 1850. Both alternatives allow ePDCCH transmissions in the DwPTS 1850 comprising 3 OFDM symbols.

A few methods for mapping DMRS in the 3 OFDM symbol DwPTS are developed in this disclosure.

In one method, two consecutive OFDM symbols are selected for the DMRS mapping for the DwPTS 1850. For example, the two consecutive OFDM symbols can be the first and the second OFDM symbols, or the second and the third OFDM symbols. In case APs 107-108 are mapped, 3 (normal-CP) or 4 (extended-CP) subcarriers are selected for the DMRS mapping. In case APs 107-111 are mapped, 6 subcarriers are selected for the DMRS mapping for the normal-CP subframes.

In case PSS occupy one OFDM symbol out of the 3 OFDM symbols of the DwPTS 1850, the OFDM symbol for the PSS is different from any of the two OFDM symbols for the UE-RS.

In case both PSS and SSS occupy two OFDM symbols in the center 6 PRBs of the DwPTS 1850, the center 6 PRBs cannot be scheduled/configured to be used for PDSCH or ePDCCH transmissions, while the other PRBs can be scheduled/configured to be used for PDSCH or ePDCCH transmissions.

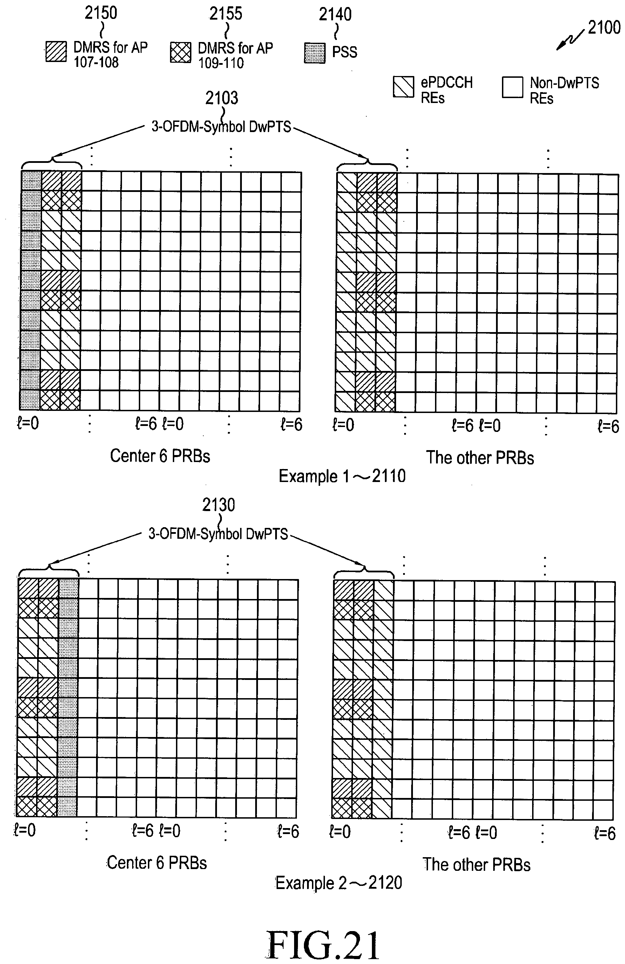

FIGURE 21 illustrates example DMRS mapping patterns for the case of normal CP, according to some embodiments of the current disclosure. The embodiment of the DMRS mapping patterns 2100 shown in FIGURE 21 is for illustration only. Other embodiments could be used without departing from the scope of the present disclosure.

Example 1 in FIGURE 21, 2110, assumes that the first OFDM symbol in the 3-OFDM symbol DwPTS 2130 is used for mapping PSS 2140, and hence, the DMRS, 2150 and 2155, are mapped onto REs within the second and the third OFDM symbols in the DwPTS 2130.

Example 2 in FIGURE 21, 2120, assumes that the third OFDM symbol in the 3-OFDM symbol DwPTS 2130 is used for mapping PSS 2140 (as in the legacy specifications), and hence, the DMRS, 2150 and 2155, are mapped onto REs within the first and the second OFDM symbols in the DwPTS 2130. It is noted that example 2 can be used even in MBSFN subframes where only the first two OFDM symbols can be used for PHY control signaling.

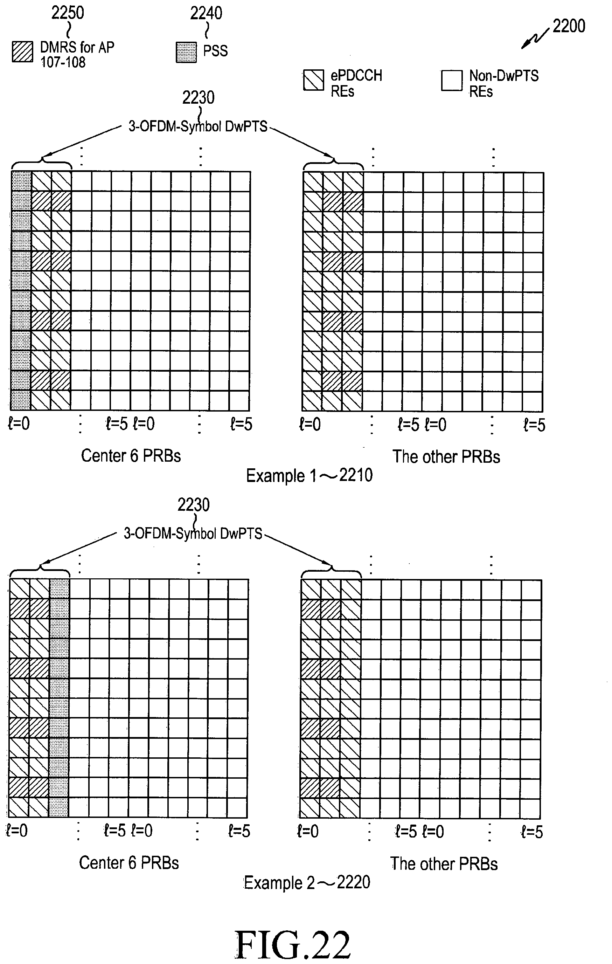

FIGURE 22 illustrates example DMRS mapping patterns for the case of extended CP, according to some embodiments of the current disclosure. The embodiment of the DMRS mapping patterns 2200 shown in FIGURE 22 is for illustration only. Other embodiments could be used without departing from the scope of the present disclosure.

Example 1 in FIGURE 22, 2210, assumes that the first OFDM symbol in the 3-OFDM symbol DwPTS 2230 is used for mapping PSS 2240, and hence, the DMRS 2250 are mapped onto REs within the second and the third OFDM symbols in the DwPTS 2230.

Example 2 in FIGURE 22, 2220, assumes that the third OFDM symbol in the 3-OFDM symbol DwPTS 2230 is used for mapping PSS 2240 (as in the legacy specifications), and hence, the DMRS, 2250, are mapped onto REs within the first and the second OFDM symbols in the DwPTS 2230. It is noted that example 2 can be used even in MBSFN subframes where only the first two OFDM symbols can be used for PHY control signaling.

In some embodiments, DMRS patterns in Example 2, 2120 and 2220, are used for both case of 3-OFDM symbol DwPTS, 2130 and 2230, and MBSFN subframes configured in the NCT cell.

In some embodiments, DMRS patterns in Example 1, 2110 and 2210, are used for 3-OFDM DwPTS, 2130 and 2230, and the DMRS patterns in Example 2, 2120 and 2220, are used for the MBSFN subframes configured in the NCT cell.

In some embodiments, in 3-OFDM-symbol DwPTS in NCT serving cells, all the three OFDM symbols are used for EPDCCH transmissions, with excluding PSS/DMRS/CSI-RS REs if any.

In some embodiments, in the MBSFN subframes in NCT serving cells, the first two OFDM symbols in the first time slot are used for EPDCCH transmissions, with excluding PSS/DMRS/CSI-RS REs if any.

Number of available REs for ePDCCH mapping in a PRB of a 3 OFDM-symbol DwPTS, 2130 and 2230, (DwPTS in TDD special subframe configurations 0 and 5 with normal CP, 0 and 4 with extended CP) is determined dependent upon the number of UE-RS REs per PRB, and the numbers of ePDCCH REs are 30 and 28 if UE-RS is used according to FIGURE 21 and FIGURE 22, respectively. See Table 14 for more details.

Table 14 Number of ePDCCH REs per PRB for 3-OFDM symbol DwPTS

|  | Normal CP, 6 UE-RS REs per PRB (Figure 4) | Extended CP, 8 UE-RS REs per PRB (Figure 5) |
|---|---|---|
| ePDCCH REs | 30 (=36-6) | 28 (= 36-8) |

The number of ePDCCH REs for the 3-OFDM symbol DwPTS, 2130 and 2230, is approximately one third of those for the 8 or 9-OFDM symbol DwPTS. In the Rel-11 3GPP LTE specifications, the number of ECCEs per PRB pair in the 8 or 9-OFDM symbol DwPTS is 2. The number of available REs for the 3-OFDM symbol DwPTS, 2130 and 2230, is clearly not sufficient to map 2 ECCEs.

In some embodiments, N consecutive PRB pairs in frequency domain are bundled to form an ECCE mapping unit. Either 2 or 4 ECCEs are mapped onto each ECCE mapping unit.

In one method, exactly two ECCEs are mapped onto a single ECCE mapping unit, when subframe type is a first category. The first category subframes are:

> When normal CP is configuredWhole DwPTS configured by special subframe configurations 0 and 5;
> When extended CP is configuredWhole DwPTS configured by special subframe configurations 0 and 4 and 7;
> MBSFN subframe in NCT cells, in which case an ECCE mapping unit occupies the control region (i.e., the first two OFDM symbols) of the MBSFN subframe.

The second category subframes are the complement type of subframes falling into the first category subframes, such as, normal DL subframes, DwPTS configured with the other special subframe configurations than those for the first category subframes, non-MBSFN subframes, and the like.

In some embodiments, the N number of PRB pairs forming an ECCE mapping unit is determined (configured to be), depending on the subframe type and the special subframe configuration. In one example, if the subframe type falls into the first category, N > 1; if the subframe type falls into the second category, N = 1.

In one method, to indicate the ECCE mapping units in the ECCE set configurations, it is proposed to define ECCE resource block groups (ERGs). Fixed system bandwidth dependent ERGs of size N partition the system bandwidth and each ERG consists of consecutive PRBs. If $N_{RB}^{DL} \bmod N > 0$ then one of the ERGs is of size $N_{RB}^{DL} - N\left\lfloor N_{RB}^{DL} / N \right\rfloor$.

In one method, UE 116 is configured with a set of ECCE mapping units by means of a bitmap, individual bit of which indicates whether a certain ERG is configured as an ECCE mapping unit for UE 116 to monitor or not.

In one method, UE 116 is configured with a set of ECCE mapping units by means of the following mechanism.

For a given serving cell, for each EPDCCH-ERG set $p$, UE 116 is configured with a higher layer parameter eCCEResourceBlockGroupAssignment indicating a combinatorial index $r$ corresponding to the ERG index $\{k_i\}_{i=0}^{N_{ERG}^{X_p}}$,

$(1 \le k_i \le N_{ERG}^{DL}, k_i < k_{i+1})$ and given by equation $r = \sum_{i=0}^{N_{ERG}^{X_p}-1} \left\langle \begin{matrix} N_{ERG}^{DL} - k_i \\ N_{ERG}^{DL} - i \end{matrix} \right\rangle$ as defined in section 7.2.1 of 36.213, where $N_{ERG}^{DL} = \left\lceil N_{RB}^{DL} / N \right\rceil$ is the number of ERGs associated with the downlink bandwidth, $N_{ERG}^{p}$ is the number of ERGs constituting EPDCCH-ERG $p$, and is configured by the higher layer parameter numberERGs, and $\left\langle \begin{matrix} x \\ y \end{matrix} \right\rangle = \begin{cases} \begin{pmatrix} x \\ y \end{pmatrix} & x \ge y \\ 0 & x < y \end{cases}$ is the extended binomial coefficient, resulting in unique label $r \in \left\{ 0,..., \begin{pmatrix} N_{ERG}^{DL} \\ N_{ERG}^{X_p} \end{pmatrix} - 1 \right\}$.

In one method, the ERG size is determined as a function of the system BW. Some alternatives to the ERG size are shown in Table 15.

Alt 1: the PRG (precoding resource block group) size defined for the PRB bundling

Alt 2: the RBG (resource block group) size

Alt 3: the fourth column in Table 15, where the minimum ERG size is set to 2, so that we can have sufficient number of EREGs to form an ECCE.

Table 15: ERG Sizes

| System Bandwidth ($N_{RB}^{DL}$) | Alt 1: ERG Size (N) (PRBs) | Alt 2: ERG Size (N) (PRBs) | Alt 3: ERG Size (N) (PRBs) |
|---|---|---|---|
| ≤ 10 | 1 | 1 | 2 |
| 11 - 26 | 2 | 2 | 2 |
| 27 - 63 | 3 | 3 | 3 |
| 64 - 110 | 2 | 4 | 4 |

In one method, the ERG size is constant, e.g., N = 3, regardless of the downlink system bandwidth.

In case of localized mapping, UE 116 can assume that the same precoders are used across the N consecutive PRB pairs comprising one ECCE mapping unit.

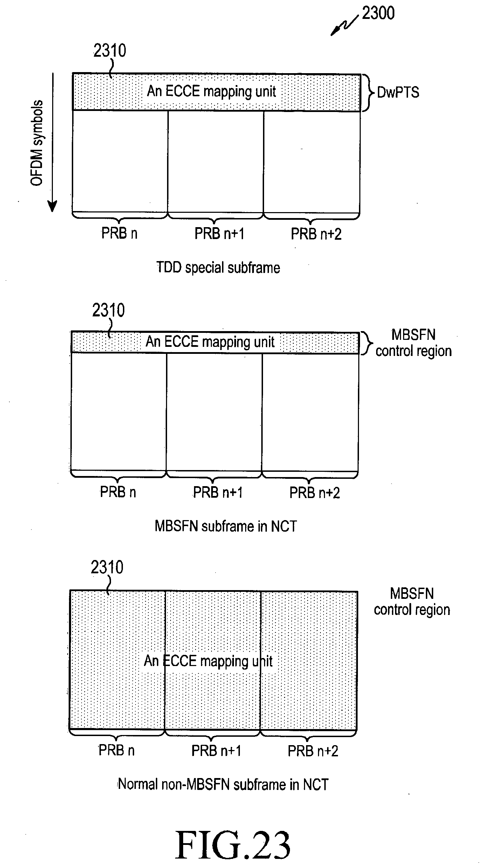

FIGURE 23 illustrates an ECCE mapping unit comprising 3 consecutive PRB pairs, in the case of TDD special subframes (DwPTS) 2320, MBSFN subframes in NCT 2330, and normal non-MBSFN subframes in NCT, 2340. The embodiments of the ECCE mapping unit 2300 shown in FIGURE 23 are for illustration only. Other embodiments could be used without departing from the scope of the present disclosure.

When N=3, 3 consecutive PRB pairs comprise an ECCE mapping unit 2310. In this case, the number of ePDCCH REs in the 3-OFDM symbol DwPTS, 2130 and 2230, per ECCE mapping unit is approximately 36x3 = 108, which is similar to the number of ePDCCH REs in the 9-OFDM symbol DwPTS. Then, UE 116 can follow a similar procedure for the EREG mapping and ECCE mapping in the 3-OFDM symbol DwPTS, 2130 and 2230, to the mapping methods used for 9-OFDM symbol DwPTS, with replacing the parameters defined for each PRB pair with the parameters defined for each ECCE mapping unit 2310. It is also noted that the number of OFDM symbols comprising an ECCE mapping unit varies depending upon the subframe type. In MBSFN subframe 2330 on an NCT cell, the number is 2 OFDM symbols, while in a normal non-MBSFN subframe 2340, the number is 12 (extended CP) or 14 (normal CP).

According to proposed methods in the example, ECCE formation out of the EREGs can be described as in the following. In a serving cell of a new carrier type, in a DwPTS normal-CP subframe $i$ configured by special subframe configuration 0, 5, or in a DwPTS extended-CP subframe $i$ configured by special subframe configuration 0, 4 (and 7), or in an MBSFN subframe, within EPDCCH set $S_m$ in subframe $i$, the ECCEs available for transmission of EPDCCHs are numbered from 0 to $N_{ECCE,m,i}-1$ and ECCE number $n$ corresponds to:

EREGs numbered $\left(n \bmod N_{ERG}^{ECCE}\right)+jN_{ERG}^{ECCE}$ in ERG index $\left\lfloor n/N_{ERG}^{ECCE}\right\rfloor$ for localized mapping, and EREGs

numbered $\left\lfloor n/N_{ERG}^{S_m}\right\rfloor+jN_{ERG}^{ECCE}$ in ERG indices $\left(n + j \max\left(1, N_{ERG}^{S_m}/N_{ECCE}^{EREG}\right)\right) \bmod N_{ERG}^{S_m}$ for distributed mapping,

where $j = 0,1,...,N_{ECCE}^{EREG}-1$   $N_{ECCE}^{EREG}$ is the number of EREGs per ECCE (shown in Table 5), and

$N_{ERG}^{ECCE} = 16/N_{ECCE}^{EREG}$ is the number of ECCEs per ECCE mapping unit, which comprises N ERGs. The ECCE mapping units constituting EPDCCH set $Sm$ are in this paragraph assumed to be numbered in ascending order from 0 to $N_{ERG}^{S_m}-1$.

In Table 16, $N_{ECCE}^{EREG}$, the number of EREGs per ECCE is defined, where $N_{ECCE}^{EREG}$ further changes upon whether the subframe is MBSFN or non-MBSFN, in normal-CP subframes.

Table 16: Number of EREGs per ECCE, $N_{ECCE}^{EREG}$.

| Normal cyclic prefix | | | | Extended cyclic prefix | |
|---|---|---|---|---|---|
| Non-MBSFN Normal subframe | Special subframe, 3, 4, 8 | Special subframe, configuration 0, 5, 1, 2, 6, 7, 9 | MBSFN Normal subframe | Normal subframe | Special subframe, configuration 0, 4, 7, 1, 2, 3, 5, 6 |
| 4 | | | 8 | | |

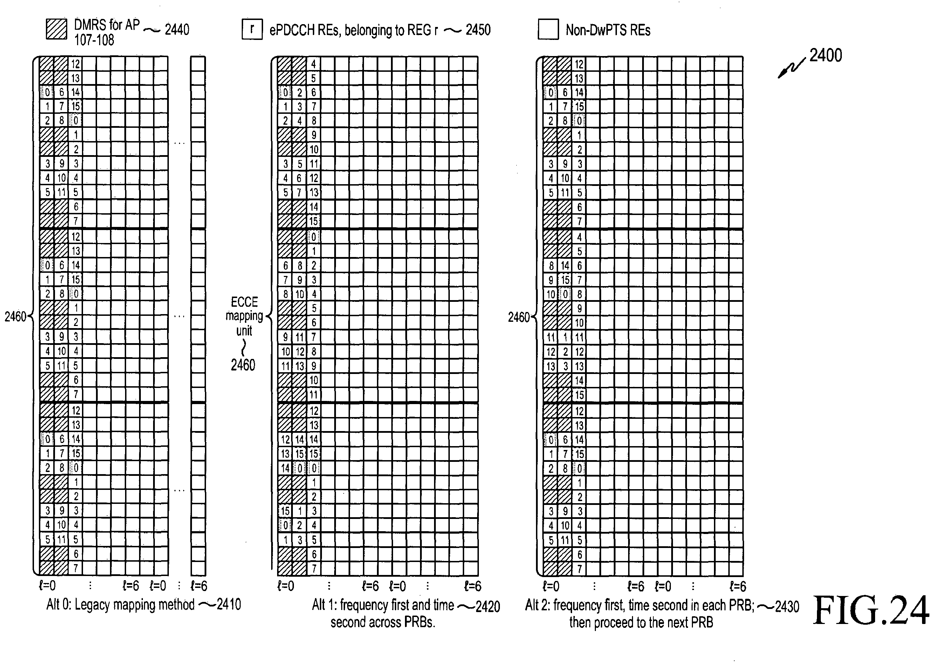

FIGURE 24 illustrates three different alternative EREG mapping methods, 2410, 2420 and 2430, applied in 3-OFDM-symbol DwPTS, where N=3 consecutive PRB pairs comprises an ECCE mapping unit 2460. The embodiment of the EREG mapping methods 2400 shown in FIGURE 24 is for illustration only. Other embodiments could be used without departing from the scope of the present disclosure.

In certain embodiments (referred to as: Alt 0 (Legacy method REF3) 2410), there are 16 EREGs, numbered from 0 to 15, per physical resource block pair. Number all resource elements, except resource elements carrying DM-RS 2440 for antenna ports $p$ = {107,108,109,110} for normal cyclic prefix or $p$ = {107,108} for extended cyclic prefix, in a physical resource-block pair cyclically from 0 to 15 in an increasing order of first frequency, then time. All resource elements with number $i$ 2450 in that physical resource-block pair constitutes EREG number $i$.

In certain embodiments (referred to as:Alt 1 2420), there are 16 EREGs, numbered from 0 to 15, per ECCE mapping unit. Number all resource elements, except resource elements carrying DM-RS 2440, in a physical resource-block pair cyclically from 0 to 15 in an increasing order of first frequency across the PRBs cyclically from 0 to 15 in an increasing order of first frequency across the PRBs comprising the ECCE mapping unit 2460, then time. All resource elements with number $i$ 2450 in that ECCE mapping unit 2460 constitutes EREG number $i$.

In certain embodiments (referred to as: Alt 2 2430), there are 16 EREGs, numbered from 0 to 15, per ECCE mapping unit. Number all resource elements, except resource elements carrying DM-RS 2440, in a physical resource-block pair cyclically from 0 to 15 in an increasing order of first frequency within a PRB, then time, and then to a next-numbered PRB. All resource elements with number $i$ 2450 in that ECCE mapping unit 2460 constitutes EREG number $i$.

Different alternatives give different numbers of REs per REG mapped in each ECCE mapping unit (N=3 consecutive PRB pairs), as shown in Table 17.

Table 17: Number of REs per EREG when $N$=3

| | Alt 0 | Alt 1 | Alt 2 |
|---|---|---|---|
| # REs per EREG in 3-OFDM-symbol DwPTS | 6 for EREGs 0 -7 3 for EREGs 8-15 | 5 for EREGs 0-7 4 for EREGs 8-15 | |
| # REs per EREG in the 2-OFDM-symbol MBSFN control region | 3 for EREGs 0 -11 0 for EREGs 12-15 | 3 for EREGs 0-3 2 for EREGs 4-15 | |

Table 17 and FIGURE 24 reveal that the legacy method of Alt 0 2410 results in non-uniform allocation of REs for the EREGs 0-7 and for EREGs 8-15. For example, EREG 0 has 6 REs per ECCE mapping unit 2460, while EREG 15 has 3 REs per ECCE mapping unit 2460. However, the number of REs per ECCE turn out to quite uniform among different ECCE numbers, regardless of localized or distributed, as the current formula ensures that either even-numbered EREGs (i.e., EREGs 0, 2, 4, 6, 8, 10, 12, 14) or odd-numbered EREGs (i.e., EREGs 1, 3, 5, 7, 9, 11, 13, 15) comprise an ECCE. The difference of the number of REs for the two ECCEs comprised out of the two (i.e., even-numbered EREGs and odd-numbered EREGs) are small.

Alternatively, Table 17 also shows that number of REs per EREG is quite small especially in the MBSFN control region. When this many number of REs are used per EREG, the resulting ECCE will have only a small number of REs, which will negatively impact the final demodulation performance.

To increase number of available REs for EREG mapping, in one alternative, it is proposed to use only two DMRS ports (APs 107-108) in the 3-OFDM-symbol DwPTS and in the control region in the MBSFN subframes in the NCT serving cell, even in the normal CP subframe.

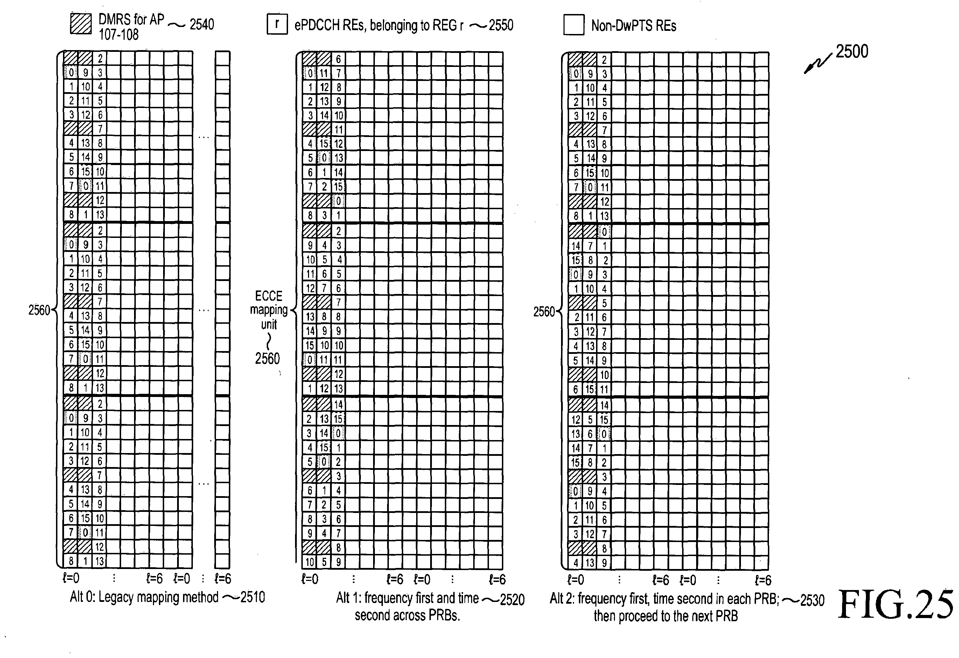

FIGURE 25 illustrates three different alternative EREG mapping methods, 2510, 2520 and 2530, applied in 3-OFDM-symbol DwPTS, where N=3 consecutive PRB pairs comprises an ECCE mapping unit 2560, according to this alternative of mapping only two DMRS ports. The embodiment of the EREG mapping methods 2500 shown in FIGURE 25 is for illustration only. Other embodiments could be used without departing from the scope of the present disclosure.

In certain embodiments (referred to as: Alt 0 (Legacy method REF3) 2410), there are 16 EREGs, numbered from 0 to 15, per physical resource block pair. Number all resource elements, except resource elements carrying DM-RS 2440 for antenna ports $p$ = {107,108,109,110} for normal cyclic prefix or $p$ = {107,108} for extended cyclic prefix, in a physical resource-block pair cyclically from 0 to 15 in an increasing order of first frequency, then time. All resource elements with number *i* 2450 in that physical resource-block pair constitutes EREG number *i*.

In certain embodiments (referred to as: Alt 1 2520), there are 16 EREGs, numbered from 0 to 15, per ECCE mapping unit. Number all resource elements, except resource elements carrying DM-RS 2540, in a physical resource-block pair cyclically from 0 to 15 in an increasing order of first frequency across the PRBs comprising the ECCE mapping unit 2560, then time. All resource elements with number *i* 2550 in that ECCE mapping unit 2560 constitutes EREG number *i*.

In certain embodiments (referred to as: Alt 2 2530), there are 16 EREGs, numbered from 0 to 15, per ECCE mapping unit. Number all resource elements, except resource elements carrying DM-RS 2540, in a physical resource-block pair cyclically from 0 to 15 in an increasing order of first frequency within a PRB, then time, and then to a next-numbered PRB. All resource elements with number *i* 2550 in that ECCE mapping unit 2560 constitutes EREG number *i*.

Different alternatives give different numbers of REs per REG mapped in each ECCE mapping unit (N=3 consecutive PRB pairs), as shown in Table 18.

Table 18 Number of REs per EREG when *N*=3

|  | Alt 0 | Alt 1 | Alt 2 |
|---|---|---|---|
| # REs per EREG | 6 for EREGs 0 - 13 | 6 for EREGs 0-9 | |
| in 3-OFDM-symbol DwPTS | 3 for EREGs 14 - 15 | 5 for EREGs 10-15 | |
| # REs per EREG in the 2-OFDM-symbol MBSFN control region | 6 for EREGs 0 - 1<br>3 for EREGs 2-15 | 4 for EREGs 0-5<br>3 for EREGs 6-15 | |

It is noted that not all the subframes configured with EPDCCH are with small number of OFDM symbols for ePDCCH mapping, and hence new UE behaviors have to be defined for those subframes.

In one method, additional RRC parameters are configured for those subframes (i.e., 3-OFDM-symbol DwPTS and/or MBSFN subframes), in addition to the RRC parameters for the normal subframes (i.e., parameters in EPDCCH-SetConfig-rl 1). The additional RRC parameters are used for configuring ePDCCH resources in those subframes, which will include at least one of the parameters described in a new information element EPDCCH-SetConfig-nct below. For example, when EPDCCH-SetConfig-nct contains epdcch-TransmissionType-nct, then depending on the subframe type and the configurations in the EPDCCH-SetConfig-nct and EPDCCH-SetConfig-rl 1, the UE may need to expect different types of transmissions in the non-MBSFN subframes and in the MBSFN subframes and DwPTS.

```
ASN1START

EPDCCH-SetConfig-nct ::=    SEQUENCE {
epdcch-SetIdentity-nct              EPDCCH-SetIdentity-nct,
epdcch-TransmissionType-nct             ENUMERATED {localised, distributed},
epdcch-ECCEMappingUnitAssignment SEQUENCE{
numberERGs                  ENUMERATED {n2, n4, n8},
eCCEResourceBlockGroupAssignment        BIT STRING (SIZE(4..38))
},
dmrs-ScramblingSequenceInt-nct          INTEGER (0..503),
pucch-ResourceStartOffset-nct       INTEGER (0..2047),
re-MappingQCLConfigListId-nct           PDSCH-RE-MappingQCL-ConfigId-nct
OPTIONAL -- Need OR
}

EPDCCH-SetIdentity-nct ::=    INTEGER (0..1)
```

ASN1STOP

| EPDCCH-Config field descriptions |
| --- |
| **dmrs-ScramblingSequenceInt** <br><br> The DMRS scrambling sequence initialization parameter $n_{\mathrm{ID},i}^{\mathrm{EPDCCH}}$ defined in TS 36.211[21, 6.10.3A.1]. |
| **epdcch-SetConfig** <br> Provides EPDCCH configuration set. See TS 36.213 [23, 9.1.4]. E-UTRAN configures at least one epdcch-SetConfig when EPDCCH-Config is configured. |
| **epdcch-SetIdentity** <br> Indicates the indentity of the EPDCCH set. |
| **numberERGs** <br> Indicates the number of eCCE resource block groups (or the number of ECCE mapping units) used for the EPDCCH set. Value n2 corresponds to 2 ECCE mapping units; n4 corresponds to 4 ECCE mapping units and so on. |
| **pucch-ResourceStartOffset** <br> PUCCH format 1a and 1b resource starting offset for the EPDCCH set. See TS 36.213 [23, 10.1, FFS). |
| **re-MappingQCLConfigListId** <br> Indicates the starting OFDM symbol, the related rate matching parameters and quasi-collocation assumption for EPDCCH when the UE is configured in tm10. This provides the index of PDSCH-RE-MappingQCL-ConfigId. E-UTRAN configures this only when tm10 is configured. |
| **eCCEResourceBlockGroupAssignment** <br> Indicates the index to a specific combination of eCCE resource block groups for EPDCCH set. See TS 36.211 [21, 6.8A.1]. |

In another method, alternatively, the set of PRBs constituting the EPDCCH ERG set in those subframes (i.e., 3-OFDM-symbol DwPTS and/or MBSFN subframes) are implicitly found by UE 116, relying on the legacy set of RRC parameters configured for the ePDCCH resources in normal subframes, EPDCCH-SetConfig-r11.

In one such alternative, the number of ERG sets in each of those subframes shall be the same as the number of EPDCCH-PRB sets in a normal subframe. Each ERG set is constructed with each EPDCCH PRB set, so that each ERG set has $N_{RB}^{X_P} \cdot N$ PRBs or $N_{RB}^{X_P}$ ERGs, where the $N_{RB}^{X_P}$ PRBs constituting the EPDCCH PRB set are included in the set of $N_{RB}^{X_P} \cdot N$ PRBs.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method comprising:

   transmitting, by a base station (102) to a user equipment, UE, (116) one or more physical downlink shared channels, PDSCHs, (430) in respective one or more transmission time intervals, TTIs,
   wherein the one or more PDSCHs are scheduled by a downlink control information, DCI, format that includes a field and is transmitted by the base station (102) in a physical downlink control channel, PDCCH, (405) in a first TTI,
   wherein, when the DCI format schedules only one PDSCH transmission to the UE (116) in the first TTI, a value of the field indicates a number of DCI formats that the base station (102) transmits to the UE (116) in a set of TTIs, and

wherein, when the DCI format schedules multiple PDSCH transmissions to the UE (116) in respective multiple TTIs, a value of the field indicates a number of the multiple TTIs in which the base station (102) transmits multiple respective PDSCHs to the UE (116).

2. The method of claim 1, further comprising: configuring, by the base station (102) using higher layer signaling, the UE (116) regarding whether the DCI format can at least one of:

schedule only one PDSCH transmission in one TTI; and
schedule multiple PDSCH transmissions in respective multiple TTIs.

3. The method of claim 1, further comprising: transmitting, by the base station (102), to the UE (116) in the first TTI, one of:

a first DCI format that can schedule multiple PDSCH transmissions in respective multiple TTIs; and
a second DCI format that can schedule only one PDSCH transmission in one TTI.

4. The method of claim 1, further comprising:

transmitting a data transport block using an asynchronous hybrid automatic repeat request process when the DCI format schedules only one PDSCH transmission to the UE in one TTI; and
transmitting a data transport block using a synchronous hybrid automatic repeat request process when the DCI format schedules multiple PDSCH transmissions to the UE in respective multiple TTIs.

5. The method of claim 4, wherein the DCI format schedules only one PDSCH transmission to the UE (116) in one TTI, when the DCI format has a first size, and schedules multiple PDSCH transmissions to the UE (116) in respective multiple TTIs, when the DCI format has a second size; and
wherein the first size is larger than the second size.

6. Abase station (102) comprising:

a transmitter; and
a processor configured to control the transmitter to transmit, to a user equipment, UE, (116) one or more physical downlink shared channels, PDSCHs, (430) in respective one or more transmission time intervals, TTIs,
wherein the one or more PDSCHs are scheduled by a downlink control information, DCI, format that includes a field and is transmitted by the base station (102) in a physical downlink control channel, PDCCH, (405) in a first TTI,
wherein, when the DCI format schedules only one PDSCH transmission to the UE (116) in the first TTI, a value of the field indicates a number of DCI formats that the base station (102) transmits to the UE (116) in a set of TTIs, and
wherein, when the DCI format schedules multiple PDSCH transmissions to the UE (116) in respective multiple TTIs, a value of the field indicates a number of the multiple TTIs in which the base station (102) transmits multiple respective PDSCHs to the UE (116).

7. The base station (102) of claim 6, wherein the processor is further configured to configure, using higher layer signaling, the UE regarding whether the DCI format can at least one of:

schedule only one PDSCH transmission in one TTI; and
schedule multiple PDSCH transmissions in respective multiple TTIs.

8. The base station (102) of claim 6, wherein the processor is further configured to transmit, to the UE, in the first TTI, one of:

a first DCI format that can schedule multiple PDSCH transmissions in respective multiple TTIs; and
a second DCI format that can schedule only one PDSCH transmission in one TTI.

9. The base station (102) of claim 6, wherein the processor is further configured to control the transmitter to:

transmit a data transport block using an asynchronous hybrid automatic repeat request process when the DCI format schedules only one PDSCH transmission to the UE in one TTI; and
transmit a data transport block using a synchronous hybrid automatic repeat request process when the DCI format schedules multiple PDSCH transmissions to the UE in respective multiple TTIs.

**10.** The base station (102) of claim 9, wherein the DCI format schedules only one PDSCH transmission to the UE in one TTI, when the DCI format has a first size, and schedules multiple PDSCH transmissions to the UE in respective multiple TTIs, when the DCI format has a second size; and wherein the first size is larger than the second size.

**11.** A method comprising:

receiving, by a user equipment, UE, (116) from a base station (102), one or more physical downlink shared channels, PDSCHs, (430) in respective one or more transmission time intervals, TTIs,
wherein the one or more PDSCHs are scheduled by a downlink control information, DCI, format that includes a field and is received by the UE (116) in a physical downlink control channel, PDCCH, (405) in a first TTI,
wherein, when the DCI format schedules only one PDSCH transmission from the base station (102) in the first TTI, a value of the field indicates a number of DCI formats that the UE (116) receives from the base station (102) in a set of TTIs, and
wherein, when the DCI format schedules multiple PDSCH transmissions from the base station (102) in respective multiple TTIs, a value of the field indicates a number of the multiple TTIs in which the UE (116) receives multiple respective PDSCHs from the base station (102).

**12.** The method of claim 11, further comprising: configuring, using higher layer signaling, whether the DCI format can at least one of:

schedule only one PDSCH transmission in one TTI; and
schedule multiple PDSCH transmissions in respective multiple TTIs.

**13.** The method of claim 11, further comprising: receiving, by the UE (116) from the base station (102), in the first TTI, one of:

a first DCI format that can schedule multiple PDSCH transmissions in respective multiple TTIs; and
a second DCI format that can schedule only one PDSCH transmission in one TTI.

**14.** The method of claim 11, further comprising:

receiving a data transport block using an asynchronous hybrid automatic repeat request process when the DCI format schedules only one PDSCH transmission from the base station (102) in one TTI; and
receiving a data transport block using a synchronous hybrid automatic repeat request process when the DCI format schedules multiple PDSCH transmissions from the base station (102) in respective multiple TTIs.

**15.** The method of claim 14, wherein the DCI format schedules only one PDSCH transmission in one TTI, when the DCI format has a first size, and schedules multiple PDSCH transmissions in respective multiple TTIs, when the DCI format has a second size; and wherein the first size is larger than the second size.

**Patentansprüche**

**1.** Verfahren, umfassend:

Übertragen, durch eine Basisstation (102) an ein Benutzergerät, UE, (116), eines oder mehrerer Physical Downlink Shared Channels, PDSCHs, (430) in einem jeweiligen Übertragungszeitintervall, TTI, oder mehreren jeweiligen TTIs,
wobei der eine PDSCH oder die mehreren PDSCHs durch ein Downlink-Steuerinformationsformat, DCI-Format, geplant wird/werden, das ein Feld einschließt und durch die Basisstation (102) in einem Physical Downlink Control Channel, PDCCH, (405) in einem ersten TTI übertragen wird,
wobei, wenn das DCI-Format nur eine PDSCH-Übertragung an das UE (116) in dem ersten TTI plant, ein Wert des Feldes eine Anzahl von DCI-Formaten angibt, die die Basisstation (102) an das UE (116) in einer Menge von TTIs überträgt, und

wobei, wenn das DCI-Format mehrere PDSCH-Übertragungen an das UE (116) in jeweiligen mehreren TTIs plant, ein Wert des Feldes eine Anzahl der mehreren TTIs angibt, in denen die Basisstation (102) mehrere jeweilige PDSCHs an das UE (116) überträgt.

2. Verfahren nach Anspruch 1, ferner umfassend: Konfigurieren, durch die Basisstation (102) unter Verwendung einer Signalisierung einer höheren Schicht, des UE (116) betreffs der Fähigkeit des DCI-Formates wenigstens Eines der Folgenden zu können:

nur eine PDSCH-Übertragung in einem TTI zu planen; und
mehrere PDSCH-Übertragungen in jeweiligen mehreren TTIs zu planen.

3. Verfahren nach Anspruch 1, ferner umfassend: Übertragen, durch die Basisstation (102), an das UE (116) in dem ersten TTI:

eines ersten DCI-Formates, das mehrere PDSCH-Übertragungen in jeweiligen mehreren TTIs planen kann; oder
eines zweiten DCI-Formates, das nur eine PDSCH-Übertragung in einem TTI planen kann.

4. Verfahren nach Anspruch 1, ferner umfassend:

Übertragen eines Datentransportblocks unter Verwendung eines asynchronen hybriden automatischen Wiederholungsanforderungspozesses, wenn das DCI-Format nur eine PDSCH-Übertragung an das UE in einem TTI plant; und
Übertragen eines Datentransportblocks unter Verwendung eines synchronen hybriden automatischen Wiederholungsanforderungspozesses, wenn das DCI-Format mehrere PDSCH-Übertragungen an das UE in jeweiligen mehreren TTIs plant.

5. Verfahren nach Anspruch 4, wobei das DCI-Format nur eine PDSCH-Übertragung an das UE (116) in einem TTI plant, wenn das DCI-Format eine erste Größe aufweist, und mehrere PDSCH-Übertragungen an das UE (116) in jeweiligen mehreren TTIs plant, wenn das DCI-Format eine zweite Größe aufweist; und
wobei die erste Größe größer als die zweite Größe ist.

6. Basisstation (102), umfassend:

einen Sender; und
einen Prozessor, der so konfiguriert ist, dass er den Sender so steuert, dass dieser einen oder mehrere Physical Downlink Shared Channels, PDSCHs, (430) in einem jeweiligen Übertragungszeitintervall, TTI, oder mehreren jeweiligen TTIs an ein Benutzergerät, UE, (116) überträgt,
wobei der eine PDSCH oder die mehreren PDSCHs durch ein Downlink-Steuerinformationsformat, DCI-Format, geplant wird/werden, das ein Feld einschließt und durch die Basisstation (102) in einem Physical Downlink Control Channel, PDCCH, (405) in einem ersten TTI übertragen wird,
wobei, wenn das DCI-Format nur eine PDSCH-Übertragung an das UE (116) in dem ersten TTI plant, ein Wert des Feldes eine Anzahl von DCI-Formaten angibt, die die Basisstation (102) an das UE (116) in einer Menge von TTIs überträgt, und
wobei, wenn das DCI-Format mehrere PDSCH-Übertragungen an das UE (116) in jeweiligen mehreren TTIs plant, ein Wert des Feldes eine Anzahl der mehreren TTIs angibt, in denen die Basisstation (102) mehrere jeweilige PDSCHs an das UE (116) überträgt.

7. Basisstation (102) nach Anspruch 6, wobei der Prozessor ferner so konfiguriert ist, dass er unter Verwendung einer Signalisierung einer höheren Schicht das UE konfiguriert betreffs der Fähigkeit des DCI-Formates wenigstens Eines der Folgenden zu können:

nur eine PDSCH-Übertragung in einem TTI zu planen; und
mehrere PDSCH-Übertragungen in jeweiligen mehreren TTIs zu planen.

8. Basisstation (102) nach Anspruch 6, wobei der Prozessor ferner so konfiguriert ist, dass er an das UE in dem ersten TTI überträgt:

ein erstes DCI-Format, das mehrere PDSCH-Übertragungen in jeweiligen mehreren TTIs planen kann; oder
ein zweites DCI-Format, das nur eine PDSCH-Übertragung in einem TTI planen kann.

9. Basisstation (102) nach Anspruch 6, wobei der Prozessor ferner so konfiguriert ist, dass er den Sender so steuert, dass dieser:

einen Datentransportblock unter Verwendung eines asynchronen hybriden automatischen Wiederholungsanforderungspozesses überträgt, wenn das DCI-Format nur eine PDSCH-Übertragung an das UE in einem TTI plant; und
einen Datentransportblock unter Verwendung eines synchronen hybriden automatischen Wiederholungsanforderungspozesses überträgt, wenn das DCI-Format mehrere PDSCH-Übertragungen an das UE in jeweiligen mehreren TTIs plant.

10. Basisstation (102) nach Anspruch 9, wobei das DCI-Format nur eine PDSCH-Übertragung an das UE in einem TTI plant, wenn das DCI-Format eine erste Größe aufweist, und mehrere PDSCH-Übertragungen an das UE in jeweiligen mehreren TTIs plant, wenn das DCI-Format eine zweite Größe aufweist; und wobei die erste Größe größer als die zweite Größe ist.

11. Verfahren, umfassend:

Empfangen, durch ein Benutzergerät, UE, (116) aus einer Basisstation (102), eines oder mehrerer Physical Downlink Shared Channels, PDSCHs, (430) in einem jeweiligen Übertragungszeitintervall, TTI, oder mehreren jeweiligen TTIs,
wobei der eine PDSCH oder die mehreren PDSCHs durch ein Downlink-Steuerinformationsformat, DCI-Format, geplant wird/werden, das ein Feld einschließt und durch das UE (116) in einem Physical Downlink Control Channel, PDCCH, (405) in einem ersten TTI empfangen wird,
wobei, wenn das DCI-Format nur eine PDSCH-Übertragung aus der Basisstation (102) in dem ersten TTI plant, ein Wert des Feldes eine Anzahl von DCI-Formaten angibt, die das UE (116) aus der Basisstation (102) in einer Menge von TTIs empfängt, und
wobei, wenn das DCI-Format mehrere PDSCH-Übertragungen aus der Basisstation (102) in jeweiligen mehreren TTIs plant, ein Wert des Feldes eine Anzahl der mehreren TTIs angibt, in denen das UE (116) mehrere jeweilige PDSCHs aus der Basisstation (102) empfängt.

12. Verfahren nach Anspruch 11, ferner umfassend: Konfigurieren, unter Verwendung einer Signalisierung einer höheren Schicht, ob das DCI-Format:

nur eine PDSCH-Übertragung in einem TTI planen kann; oder/und
mehrere PDSCH-Übertragungen in jeweiligen mehreren TTIs planen kann.

13. Verfahren nach Anspruch 11, ferner umfassend: Empfangen, durch das UE (116) aus der Basisstation (102), in dem ersten TTI:

eines ersten DCI-Formates, das mehrere PDSCH-Übertragungen in jeweiligen mehreren TTIs planen kann; oder
eines zweiten DCI-Formates, das nur eine PDSCH-Übertragung in einem TTI planen kann.

14. Verfahren nach Anspruch 11, ferner umfassend:

Empfangen eines Datentransportblocks unter Verwendung eines asynchronen hybriden automatischen Wiederholungsanforderungspozesses, wenn das DCI-Format nur eine PDSCH-Übertragung aus der Basisstation (102) in einem TTI plant; und
Empfangen eines Datentransportblocks unter Verwendung eines synchronen hybriden automatischen Wiederholungsanforderungspozesses, wenn das DCI-Format mehrere PDSCH-Übertragungen aus der Basisstation (102) in jeweiligen mehreren TTIs plant.

15. Verfahren nach Anspruch 14, wobei das DCI-Format nur eine PDSCH-Übertragung in einem TTI plant, wenn das DCI-Format eine erste Größe aufweist, und mehrere PDSCH-Übertragungen in jeweiligen mehreren TTIs plant, wenn das DCI-Format eine zweite Größe aufweist; und wobei die erste Größe größer als die zweite Größe ist.

**Revendications**

1. Procédé, comprenant :

la transmission, par une station de base (102) à un équipement d'utilisateur, *user equipment* - UE, (116), d'un ou de plusieurs canaux partagés de liaison descendante physiques, *physical downlink shared channels* - PDSCH, (430) dans un ou plusieurs intervalles de temps de transmission, *transmission time intervals* - TTI, respectifs,
où le ou les PDSCH sont programmés par un format d'informations de commande de liaison descendante, *downlink control information* - DCI, qui comprend un champ et est transmis par la station de base (102) dans un canal de commande de liaison descendante physique, *physical downlink control channel* - PDCCH, (405) dans un premier TTI,
où, si le format DCI ne programme qu'une seule transmission PDSCH à l'UE (116) dans le premier TTI, une valeur du champ indique le nombre de formats DCI que la station de base (102) transmet à l'UE (116) dans un ensemble de TTI, et
où, si le format DCI programme plusieurs transmissions PDSCH à l'UE (116) dans plusieurs TTI respectifs, une valeur du champ indique le nombre des plusieurs TTI dans lesquels la station de base (102) transmet plusieurs PDSCH respectifs à l'UE (116).

2. Procédé selon la revendication 1, comprenant en outre : la configuration de l'UE (116) par la station de base (102) au moyen d'une signalisation de couche supérieure, quant à savoir si le format DCI peut au moins un des suivants :

de ne programmer qu'une seule transmission PDSCH dans un seul TTI ; et
de programmer plusieurs transmissions PDSCH dans plusieurs TTI respectifs.

3. Procédé selon la revendication 1, comprenant en outre : la transmission à l'UE (116) par la station de base (102) dans le premier TTI :

d'un premier format DCI pouvant programmer plusieurs transmissions PDSCH dans plusieurs TTI respectifs ; ou
d'un deuxième format DCI ne pouvant programmer qu'une seule transmission PDSCH dans un seul TTI.

4. Procédé selon la revendication 1, comprenant en outre :

la transmission d'un bloc de transport de données au moyen d'un processus de demande de répétition automatique hybride asynchrone si le format DCI ne programme qu'une seule transmission PDSCH à l'UE dans un seul TTI ; et
la transmission d'un bloc de transport de données au moyen d'un processus de demande de répétition automatique hybride synchrone si le format DCI programme plusieurs transmissions PDSCH à l'UE dans plusieurs TTI respectifs.

5. Procédé selon la revendication 4, où le format DCI ne programme qu'une seule transmission PDSCH à l'UE (116) dans un seul TTI, si le format DCI a une première grandeur, et programme plusieurs transmissions PDSCH à l'UE (116) dans plusieurs TTI respectifs, si le format DCI a une deuxième grandeur ; et
où la première grandeur est supérieure à la deuxième grandeur.

6. Station de base (102), comprenant :

un émetteur ; et
un processeur prévu pour commander la transmission par l'émetteur à un équipement d'utilisateur, *user equipment* - UE, (116) d'un ou de plusieurs canaux partagés de liaison descendante physiques, *physical downlink shared channels* - PDSCH, (430) dans un ou plusieurs intervalles de temps de transmission, *transmission time intervals* - TTI, respectifs,
où le ou les PDSCH sont programmés par un format d'informations de commande de liaison descendante, *downlink control information* - DCI, qui comprend un champ et est transmis par la station de base (102) dans un canal de commande de liaison descendante physique, *physical downlink control channel* - PDCCH, (405) dans un premier TTI,
où, si le format DCI ne programme qu'une seule transmission PDSCH à l'UE (116) dans le premier TTI, une valeur du champ indique le nombre de formats DCI que la station de base (102) transmet à l'UE (116) dans un ensemble de TTI, et

où, si le format DCI programme plusieurs transmissions PDSCH à l'UE (116) dans plusieurs TTI respectifs, une valeur du champ indique le nombre des plusieurs TTI dans lesquels la station de base (102) transmet plusieurs PDSCH respectifs à l'UE (116).

**7.** Station de base (102) selon la revendication 6, où le processeur est en outre prévu pour configurer l'UE au moyen d'une signalisation de couche supérieure, sous l'aspect de la possibilité pour le format DCI :

de ne programmer qu'une seule transmission PDSCH dans un seul TTI ; et/ou
de programmer plusieurs transmissions PDSCH dans plusieurs TTI respectifs.

**8.** Station de base (102) selon la revendication 6, où le processeur est en outre prévu pour transmettre à l'UE, dans le premier TTI :

un premier format DCI pouvant programmer plusieurs transmissions PDSCH dans plusieurs TTI respectifs ; ou
un deuxième format DCI ne pouvant programmer qu'une seule transmission PDSCH dans un seul TTI.

**9.** Station de base (102) selon la revendication 6, où le processeur est en outre prévu pour commander l'émetteur pour que celui-ci :

transmette un bloc de transport de données au moyen d'un processus de demande de répétition automatique hybride asynchrone si le format DCI ne programme qu'une seule transmission PDSCH à l'UE dans un seul TTI ; et transmette un bloc de transport de données au moyen d'un processus de demande de répétition automatique hybride synchrone si le format DCI programme plusieurs transmissions PDSCH à l'UE dans plusieurs TTI respectifs.

**10.** Station de base (102) selon la revendication 9, où le format DCI ne programme qu'une seule transmission PDSCH à l'UE dans un seul TTI, si le format DCI a une première grandeur, et programme plusieurs transmissions PDSCH à l'UE dans plusieurs TTI respectifs, si le format DCI a une deuxième grandeur ; et où la première grandeur est supérieure à la deuxième grandeur.

**11.** Procédé, comprenant :

la réception, par un équipement d'utilisateur, *user equipment* - UE, (116) d'un ou de plusieurs canaux partagés de liaison descendante physiques, *physical downlink shared channels* - PDSCH, (430) en provenance d'une station de base (102), dans un ou plusieurs intervalles de temps de transmission, *transmission time intervals* - TTI, respectifs,
où le ou les PDSCH sont programmés par un format d'informations de commande de liaison descendante, *downlink control information* - DCI, qui comprend un champ et est reçu par l'UE (116) dans un canal de commande de liaison descendante physique, *physical downlink control channel* - PDCCH, (405) dans un premier TTI,
où, si le format DCI ne programme qu'une seule transmission PDSCH en provenance de la station de base (102) dans le premier TTI, une valeur du champ indique le nombre de formats DCI que l'UE (106) reçoit de la station de base (102) dans un ensemble de TTI, et
où, si le format DCI programme plusieurs transmissions PDSCH en provenance de la station de base (102) dans plusieurs TTI respectifs, une valeur du champ indique le nombre des plusieurs TTI dans lesquels l'UE (116) reçoit plusieurs PDSCH respectifs de la station de base (102).

**12.** Procédé selon la revendication 11, comprenant en outre : la configuration au moyen d'une signalisation de couche supérieure, sous l'aspect de la possibilité pour le format DCI :

de ne programmer qu'une seule transmission PDSCH dans un seul TTI ; et/ou
de programmer plusieurs transmissions PDSCH dans plusieurs TTI respectifs.

**13.** Procédé selon la revendication 11, comprenant en outre : la réception par l'UE (116) dans le premier TTI en provenance de la station de base (102) :

d'un premier format DCI pouvant programmer plusieurs transmissions PDSCH dans plusieurs TTI respectifs ; ou
d'un deuxième format DCI ne pouvant programmer qu'une seule transmission PDSCH dans un seul TTI.

**14.** Procédé selon la revendication 11, comprenant en outre :

la réception d'un bloc de transport de données au moyen d'un processus de demande de répétition automatique hybride asynchrone si le format DCI ne programme qu'une seule transmission PDSCH en provenance de la station de base (102) dans un seul TTI ; et
la réception d'un bloc de transport de données au moyen d'un processus de demande de répétition automatique hybride synchrone si le format DCI programme plusieurs transmissions PDSCH en provenance de la station de base (102) dans plusieurs TTI respectifs.

**15.** Procédé selon la revendication 14, où le format DCI ne programme qu'une seule transmission PDSCH dans un seul TTI, si le format DCI a une première grandeur, et programme plusieurs transmissions PDSCH dans plusieurs TTI respectifs, si le format DCI a une deuxième grandeur ; et où la première grandeur est supérieure à la deuxième grandeur.

FIG.1

| 205 | 210 | 215 | 220 | 225 | 230 |
|---|---|---|---|---|---|

DATA IN → | CHANNEL CODING & MOD. | → | S-TO-P | → | SIZE N IFFT | → | P-TO-S | → | ADD CYCLIC PREFIX | → | UC | → TO CHANNEL

## FIG.2A

| 255 | 260 | 265 | 270 | 275 | 280 |
|---|---|---|---|---|---|

FROM CHANNEL → | DC | → | REMOVE CYCLIC PREFIX | → | S-TO-P | → | SIZE N FFT | → | P-TO-S | → | CHANNEL DECOD. & DEMOD. | → DATA OUT

## FIG.2B

EP 2 962 408 B1

116

330                325                      310      305

SPEAKER ← RX PROCESSING CIRCUITRY ← RF TRANSCEIVER

320                315

MICROPHONE → TX PROCESSING CIRCUITRY

345                                     340        350

I/O IF ↔ MAIN PROCESSOR ← KEYPAD

DISPLAY

355

MEMORY

BASIC OPERATING SYSTEM ~361

~360

APPLICATIONS ~362

FIG.3

FIG.4

FIG.5

600

610 CONTROL SIGNAL

620 DEMODULATION & DE-INTERLEAVING

630 RATE MATCHING

640 CHANNEL DECODING

650 CRC EXTRACTION

DCI FORMAT BITS ~660

CRC

C-RNTI MASK ~680

670 XOR

690 CRC TEST

FIG.6

EP 2 962 408 B1

FIG.7

FIG.8

FIG.9

| TTI#0 | TTI#1 | TTI#2 | TTI#3 | TTI#4 | TTI#5 | TTI#6 | TTI#7 | TTI#8 | TTI#9 |
|---|---|---|---|---|---|---|---|---|---|
| EPDCCH | PDCCH | UL | UL | UL | EPDCCH | PDCCH | UL | UL | UL |

FIG.10

EP 2 962 408 B1

1100

1110

Higher Layer Configuration for
DL Multi- TTI Scheduling?

Yes

1120

DL DAI indicates total number of PDSCH
transmissions in bundling window

No

DL DAI indicates number of DL DCI
format in bundling window

1130

FIG.11

FIG.12

FIG.13

FIG.14

FIG.15

1600

DL index field is included in a first DL DCI format DL index field is not included in a second DL DCI format —1610

First or second detected DL DCI format? /1620

First → UE receives PDSCH over some TTIs of a DL multi- TTI scheduling window, as indicated by the DL index field /1630

Second

UE receives PDSCH only in same TTI - UE suspends PDSCH reception (if any) in remaining TTIs of DL multi - TTI scheduling window —1640

FIG.16

FIG.17

ONE RADIO FRAME $T_f = 307200T_s = 10$ ms ~1810

ONE HALF-FRAME, $153600T_s = 5$ ms ~1820

ONE SLOT, $T_{slot} = 15360T_s$

A SPECIAL SUBFRAME $30720T_s$ ~1840

1880

ONE SUBFRAME, $30720T_s$ ~1830

SUBFRAME 0

DwPTS ~1850   GP ~1860   UpPTS ~1870

SUBFRAME 2   SUBFRAME 3   SUBFRAME 4   SUBFRAME 5   SUBFRAME 7   SUBFRAME 8   SUBFRAME 9

DwPTS   GP   UpPTS

1800

FIG.18

FIG.19

FIG.20

FIG.21

FIG.22

FIG.23

FIG.24

FIG.25

Alt 0: Legacy mapping method ~2510

Alt 1: frequency first and time second across PRBs. ~2520

Alt 2: frequency first, time second in each PRB; ~2530 then proceed to the next PRB

## REFERENCES CITED IN THE DESCRIPTION

**Non-patent literature cited in the description**

- DAI Design for L TE-A. **CATT.** 3GPP DRAFT; R1-1 04311, 3RD GENERATION PARTNERSHIP PROJECT (3GPP). MOBILE COMPETENCE CENTRE, 17 August 2010
- Details of ACK/NAK bundling for TDD. **ERICSSON.** 3GPP DRAFT; R1-081566, 3RD GENERATION PARTNERSHIP PROJECT (3GPP). MOBILE COMPETENCE CENTRE, 30 March 2008
- TTI bundling. **ERICSSON.** 3GPP DRAFT; R1-084549 CR0143R1 TO 36213 ON TTI BUNDLING, 3RD GENERATION PARTNERSHIP PROJECT (3GPP). MOBILE COMPETENCE CENTRE, 18 November 2008
- Physical layer procedures. *3GPP TS 36.213 V11.1.0,* 01 December 2012

- Remaining issues for TDD ACK/NAK bundling and PUSCH. **ERICSSON.** 3GPP DRAFT; R1-082462, 3RD GENERATION PARTNERSHIP PROJECT (3GPP). MOBILE COMPETENCE CENTRE, 25 June 2008
- Details of ACK/NAK bundling for TDD. **ERICSSON.** 3GPP DRAFT; R1-082002, 3RD GENERATION PARTNERSHIP PROJECT (3GPP). MOBILE COMPETENCE CENTRE, 14 May 2008
- Multi-TTI Scheduling for LTE TDD UL. **CATT.** 3GPP DRAFT; R1-080797 MUL TI-TTI SCHEDULING FOR LTE TDD UL, 3RD GENERATION PARTNERSHIP PROJECT (3GPP). MOBILE COMPETENCE CENTRE, 05 February 2008
- Remaining Details on ACK1NACK Bundling for TDD. **MOTOROLA.** 3GPP DRAFT; R1-082473, 3RD GENERATION PARTNERSHIP PROJECT (3GPP). MOBILE COMPETENCE CENTRE, 24 June 2008